# EUROPÄISCHE PATENTSCHRIFT

(11) **EP 2 618 670 B1**
(45) Veröffentlichungstag und Bekanntmachung des Hinweises auf die Patenterteilung: **29.07.2015**
(21) Anmeldenummer: 11771051.7
(22) Anmeldetag: 23.09.2011
(51) Int. Cl.: A21C 3/08

(54) **TEIGVERARBEITUNGSSYSTEM UND VERFAHREN HIERFÜR**
DOUGH PROCESSING SYSTEM AND METHOD THEREFOR
SYSTÈME DE TRAVAIL DE PÂTE ET PROCÉDÉ APPROPRIÉ

(30) Priorität: 24.09.2010 DE 102010037761
(43) Veröffentlichungstag der Anmeldung: 31.07.2013
(73) Patentinhaber: Fritsch GmbH, 97348 Markt Einersheim (DE)
(72) Erfinder: BERNHARDT, Udo, 97346 Iphofen (DE)
(74) Vertreter: Götz, Georg Alois
(86) Internationale Anmeldenummer: PCT/EP2011/066572
(87) Internationale Veröffentlichungsnummer: WO 2012/038527

(56) Entgegenhaltungen:
- WO-A1-01/60164
- WO-A1-95/08921
- WO-A1-98/20741
- DE-A1- 10 146 799

## Beschreibung

Die Erfindung betrifft ein Teigverarbeitungssystem zum Verarbeiten eines U-förmigen Teigstrangs mit einem Verarbeitungskopf, das zwei Greifermittel zum Schlingen des Teigstrangs umfasst sowie einen Formtisch umfasst, das mit Positionierungsmitteln zum Positionieren des Teilstrangs versehen ist. Die Erfindung betrifft auch ein Verfahren zur Herstellung eines Einstrangzopfes.

Bekannt sind Teigverarbeitungssysteme der genannten Art zum maschinellen Herstellen von Brezeln. Ein solches System ist beispielsweise in der WO 01/60164 gezeigt und beschrieben. Dieses System besteht aus zwei Hauptkomponenten. Die erste Komponente ist ein Verarbeitungskopf, der mit zwei programmgesteuerten Greifern versehen ist. Die zweite Komponente ist ein im Formtisch integrierter Haltekörper, der mehrere als Haltestifte ausgeführte Positionierungsmittel umfasst. Die Haltestifte halten den Teigstrang am Formtisch während einer Schlingbewegung bei der Herstellung der Brezelform.

Der Erfindung liegt die Aufgabe zugrunde, ein Teigverarbeitungssystem zu schaffen, mit dem die vollautomatische Herstellung einer anderen Teigform möglich ist, insbesondere mit dem die Herstellung eines sogenannten Einstrangzopfes möglich ist.

Diese Aufgabe wird durch ein System mit den kennzeichnenden Merkmalen des Anspruches 1 in Verbindung mit seinen Oberbegriffsmerkmalen gelöst bzw. durch die Merkmale der unabhängigen Ansprüche gelöst.

Indem die Verarbeitungselemente in dem Tisch integriert sind, können in Kombination mit den Greiferarmen des Kopfes die für einen Zopf charakteristischen Schlaufen und Formen gebildet werden.

Durch die Erfindung können grundsätzlich auch andere Teigformen geformt werden.

Die Erfindung betrifft auch ein Verfahren zum Verarbeiten eines Teigstranges aus einem U-förmig gebogenen Teigstrang, bei dem mittels eines zwei Greifermittel umfassenden Verarbeitungskopfes und eines verschiedene Verarbeitungsfunktionen aufweisenden Verarbeitungstisches ein Einstrangzopf geformt wird. Durch das erfindungsgemäße Verfahren ist eine vollautomatische Herstellung eines Einstrangzopfes in hoher Stückzahl möglich.

Weitere vorteilhafte Ausgestaltungen der Erfindung sind in den Unteransprüchen gekennzeichnet.

Im erfindungsgemäßen Systems ist vorgesehen, dass wenigstens ein Positionierungsmittel als Anhebemittel zum Anbeben eines Teigstrangbereichs in einer Anhebungsposition ausgeführt ist, so dass der Teigstrang gegenüber dem Formtisch bereichsweise angehoben ist. Dadurch kann ein Teigstrangende unter einem Strangbereich hindurch bewegt werden, so dass eine Zopfform möglich ist.

Gemäß der Erfindung ist zusätzlich oder alternativ wenigstens ein Positionierungsmittel als Greifermittel zum Ziehen eines Teigstrangendes ausgeführt, so dass der Teigstrang bereichsweise gedehnt und/oder gezogen wird. Dieses Ziehen ist günstig, weil so ein dritter Greifer zur Verfügung steht, damit ohne Zuhilfenahme des Werkzeugkopfes eine Art Knoten möglich ist, ohne den kein Einstrangzopf möglich ist.

Gemäß der Erfindung ist zusätzlich oder alternativ wenigstens ein Positionierungsmittel als Schwenkmittel zum Verschwenken einer durch die Greifermittel des Verarbeitungskopfes geformten Teigstrangschlinge um eine parallel zur Ebene des Verarbeitungstisches angeordneten Drehachse ausgeführt. Durch dieses Mittel kann eine Schlaufe um 180° gedreht werden, ohne die ebenfalls kein Einstrangzopf möglich ist.

Zur Herstellung eines Einstrangzopfes ist es daher von Vorteil, dass am Verarbeitungstisch wenigstens ein Anhebemittel, ein Greifermittel und ein Schwenkmittel vorhanden sind.

Bei einer weiteren vorteilhaften Ausführung der Erfindung weist das Schwenkmittel zwei voneinander beabstandete Haltearme auf, die quer zu einer Förderrichtung des Verarbeitungstisches gerichtet sind und an einem ihrer Enden eine, insbesondere L-förmige, Haltezunge tragen, wobei beide Haltearme um eine zu den Haltearmen beabstandete, parallele Drehachse drehbar sind, und wobei die Haltearme an den gegenüberliegenden Enden der Haltezungen an einer Lagerung fixiert sind, die um eine in Förderrichtung des Verarbeitungstisches gerichtete Achse kippbar sind, so dass eine Auf- und Ab-Bewegung der Haltearme bzw. der Haltezungen entsteht. Die Haltearme können die charakteristische Schlaufe des Einstrangzopfes herstellen, wobei zwischen den Armen eine Positionierung des Zopfendes in die Schlaufe durch einen Greifer des Kopfes möglich ist.

Eine besonders bevorzugte Weiterbildung der Erfindung zeichnet sich dadurch aus, dass am Verarbeitungstisch ein, vorzugsweise U-förmiges, Positionierungsmittel zum Fixieren eines Teigstrangendes während der Teigverarbeitung vorhanden ist, wobei dieses Positionierungsmittel in den Verarbeitungstisch eintauchbar ausgeführt ist. Hierdurch lässt sich der Teigstrang zu Beginn der Teigformung leicht am Tisch halten, so dass auch bei hoher Stückzahl stets die gleiche Form erreichbar ist.

Damit die Form einer Schlaufe erhalten bleibt, ist es von Vorteil, wenn am Verarbeitungstisch wenigstens ein Positionierungsmittel als ein Haltestift ausgeführt ist, das in den Verarbeitungstisch eintauchbar ist. Dieses bildet das Gegenstück zu einem weiter unten beschriebenen Drehantrieb.

Eine andere bevorzugte Weiterbildung der Erfindung zeichnet sich dadurch aus, dass der Verarbeitungstisch mit mehreren nebeneinanderliegenden Förderbändern versehen ist, wobei zumindest ein Teil der Positionierungsmittel zwischen den Förderbändern angeordnet sind. Zwischen den einzelnen Riemen lassen sich die Verarbeitungselemente gut unterbringen.

Das erfindungsgemäße Verfahren ist besonders vorteilhaft, wenn dieses folgende Schritte umfasst:
- einen Teigstrang-Zuführungsschritt, bei dem der U-förmige Teigstrang dem Verarbeitungstisch zugeführt wird,
- einen Verarbeitungsschritt, bei dem aus dem U-förmigen Teigstrang aus einer sich überkreuzenden Teigbewegung eine etwa brezelartige Grundform mit einer ersten Schlinge und einer zweiten Schlinge geformt wird, wobei aber der Teigstrang im Kreuzungspunkt nicht geschlungen bzw. nicht verknotet ist,
- einen ersten Fixierungsschritt, bei dem ein Ende des Teigstranges am Verarbeitungstisch und/oder am Teigstrang im Bereich der ersten Schlinge fixiert wird,
- einen zweiten Fixierungsschritt, bei dem der Teilstrang im Bereich der dem Ende gegenüberliegenden, zweiten Schlinge am Verarbeitungstisch fixiert wird,
- einen Anhebeschritt, bei dem der Teilstrang im Bereich der zweiten Schlinge angehoben wird,
- einen Greifschritt, bei dem ein anderes Teigende von einem am Verarbeitungstisch angeordneten Greifmittel gegriffen wird und zwischen dem Verarbeitungstisch und einem Teilstrangbereich durchgezogen wird,
- einen weiteren Greifschritt, bei dem das andere Ende von einem am Verarbeitungskopf angeordneten Greifmittel gegriffen wird,
- einen Schwenkschritt, bei dem die zweite Schlinge um etwa 180° um eine quer zur Förderrichtung des Verarbeitungstisches angeordnete Achse in der angehobenen Position geschwenkt wird, wobei der Teig nun sich anschließend an zwei Stellen überkreuzt,
- einen Teig-Bewegungsschritt, bei dem die zweite Schlinge wieder auf den Verarbeitungstisch gelegt wird, und
- einen weiteren Teig-Bewegungsschritt, bei dem das Teigende in die zweite Schlinge gelegt und/oder durch die Schlingenöffnung hindurch gedrückt wird.

Durch diese Schritte ist eine schnelle und präzise Formgebung möglich.

Zweckmäßig ist es, wenn der Verarbeitungsschritt zur Schaffung der brezelartigen Grundform durch Greifermittel des Verarbeitungskopfes erfolgt, wenn der erste Fixierungsschritt mittels eines, vorzugsweise U-förmigen, Positionierungsmittel erfolgt, wenn der zweite Fixierungsschritt durch einen Haltestift erfolgt, wenn der Anhebeschritt durch mindestens ein Anhebemittel, vorzugsweise durch ein linear geführtes Anhebeelement und/oder durch Haltearme erfolgt, wenn der Schwenkschritt durch zwei Haltearme erfolgt, wenn der Teig-Bewegungsschritt durch Kippen der Haltearme in Richtung des Verarbeitungstisches erfolgt, und wenn der weitere Teig-Bewegungsschritt durch ein am Verarbeitungskopf angeordneten Greifermittel erfolgt.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine perspektivische Darstellung eines erfindungsgemäßen Systems in einer Grundstellung,
- Fig. 2: einen Einstrangzopf,
- Fig. 3a - c: eine bekannte, manuelle Herstellung eines Einstrangzopfes,
- Fig. 4: einen Werkzeugkopf des Systems von unten gesehen,
- Fig. 5: eine perspektivische Darstellung des Systems mit einem U-förmigen Teigstrang,
- Fig. 6: eine vergrößerte perspektivische Darstellung eines Form- bzw. Schlingtisches,
- Fig. 7: eine Darstellung einer Stellung des Systems ohne Teigstrang, bei dem ein Strang durchgezogen wird und erneut gegriffen werden kann,
- Fig. 8: eine perspektivische Darstellung des Systems in einer ersten Ablegeposition,
- Fig. 9: eine Darstellung des System in einer Grundstellung aus einer ersten Perspektive,
- Fig. 10: eine perspektivische Darstellung der Grundstellung aus einer zweiten Perspektive,
- Fig. 11: eine perspektivische Darstellung des Systems, bei dem zwei Greifer den U-förmigen Teigstrang greifen,
- Fig. 12: eine perspektivische Darstellung des Systems, bei dem der Teig durch die Greifer eine Form erhält,
- Fig. 13: eine perspektivische Darstellung des Systems, bei dem der Teig durch die Greifer leicht überkreuzt wird,
- Fig. 14: eine perspektivische Darstellung des Systems, bei dem der Teig durch die Greifer vollständig überkreuzt wird,
- Fig. 15: eine perspektivische Darstellung des Systems, bei dem der Teig etwa eine brezelartige Ausgangsform hat,
- Fig. 16: eine perspektivische Darstellung des Systems, bei dem der Teig bereichsweise angehoben wird,
- Fig. 17: eine Darstellung des Systems, bei dem der Teig noch angehoben ist, jedoch aus der zweiten Perspektive gesehen,
- Fig. 18: eine perspektivische Darstellung eines Ziehvorgangs aus der zweiten Perspektive,
- Fig. 19: eine perspektivische Darstellung eines Greifvorgangs eines oberen Greifers,
- Fig. 20-22: perspektivische Darstellungen, bei denen gezeigt ist, wie der Teig verdreht wird,
- Fig. 23-28: perspektivische Darstellungen, bei denen gezeigt ist, wie ein Teigende in eine Schlaufe gelegt wird,
- Fig. 29: eine perspektivische Darstellung, bei der sich alle Verarbeitungselemente des Tisches vom Einstrangzopf gelöst haben,
- Fig. 30: eine perspektivische Darstellung, bei der sich die Verarbeitungselemente in ihre Grundstellung bewegen bzw. bereits bewegt haben, und
- Fig. 31: eine perspektivische Darstellung, bei der der Tisch wieder eine Grundstellung hat.
- Fig. 32: ein Ablaufschema des Verfahrens

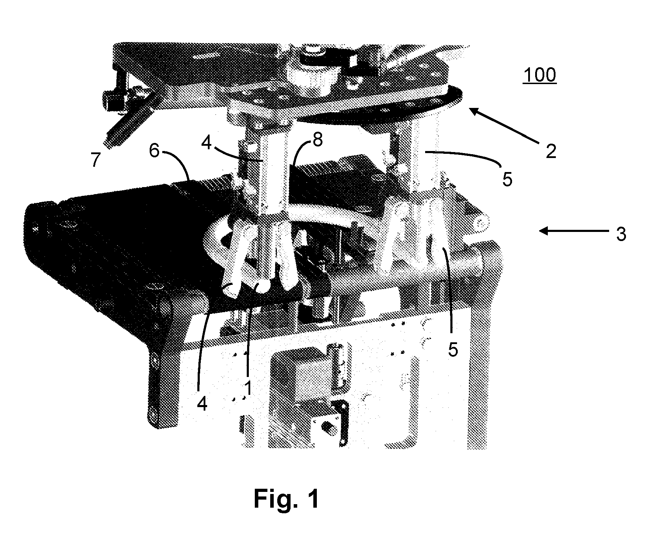

In Fig. 1 ist ein Schlingsystem bzw. ein Teigverarbeitungssystem 100 zum Herstellen eines Einstrangzopfes bzw. zum Verarbeiten eines U-förmigen Teigstrangs 1 dargestellt. Eine vorhandene Zuführeinrichtung zum Biegen des U-förmigen Teilstrangs ist bereits hinreichend bekannt und wird hier nicht näher erläutert. Ebenso kann ein Abführtisch in bekannter Weise nachgeordnet sein, das die fertigen Teigprodukte weiter befördert. Das System 100 besteht im Wesentlichen aus zwei Hauptkomponenten, und zwar einen Verarbeitungskopf 2 und einen Formtisch, der als Verarbeitungstisch 3 ausgeführt ist. Der Verarbeitungskopf 2 hat zwei, im Grunde bekannte, Greifermittel bzw. Greifer 4, 5 zum Schlingen des Teigstrangs. Die Greifer 4, 5 sind z.B. aus der WO 01/60164 bekannt. Der Verarbeitungstisch 3 hat mehrere nebeneinander angeordnete Förderbänder, die aus schmalen Förderriemen 6 und breiten Förderriemen 7, 8 bestehen. Zwischen den einzelnen Förderriemen sind verschiedenartige Positionierungsmittel angeordnet, die den Teigstrang 1 jeweils in eine Position bringen, so dass insgesamt der Einstrangzopf entsteht. Hierbei wird nicht nur ein Haltestift eingesetzt, sondern es werden auch andere Elemente eingesetzt, die mehr als nur ein "Halten" bewirken. Diese im Verarbeitungstisch 3 integrierten Elemente werden später näher erläutert. Diese Elemente haben eine Verarbeitungsfunktion, die zumindest teilweise mit einer Verarbeitungsfunktion der Greifer 4, 5 vergleichbar ist.

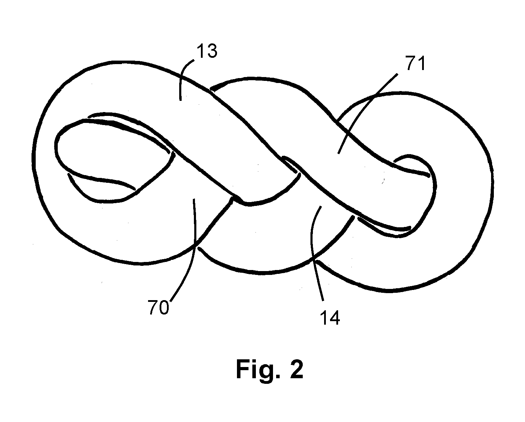

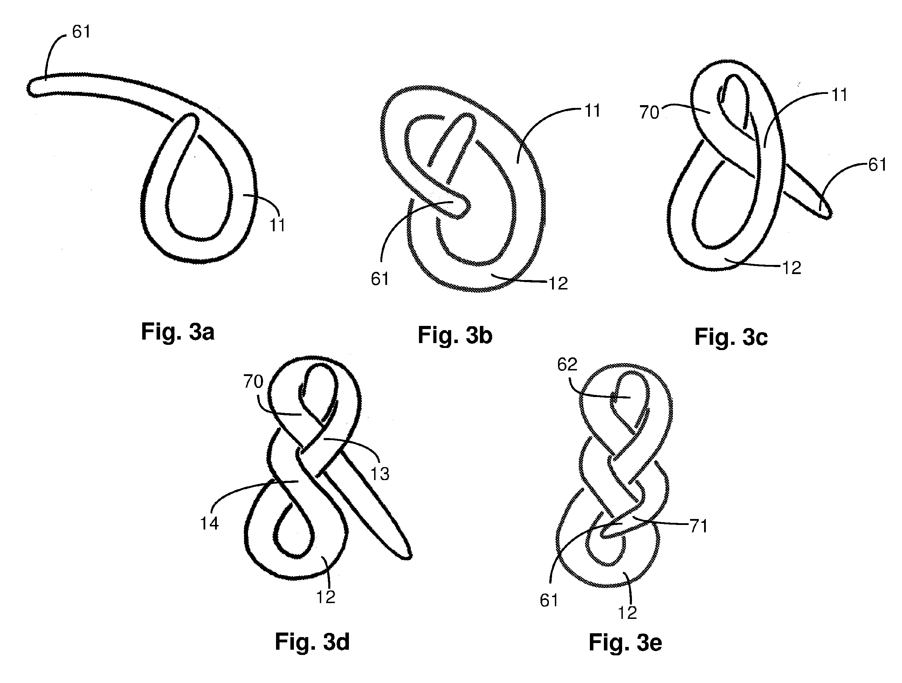

Die manuelle Herstellung eines Einstrangzopfes ist seit langem bekannt. Fig. 2 zeigt einen solchen Einstrangzopf, der sowohl manuell als auch durch die Erfindung automatisch herstellbar ist. Der Zopf hat vier charakteristische Kreuzungspunkte 13, 14, 70, 71. Die Figuren 3a - 3e veranschaulichen die manuellen Herstellungsschritte. Wie später zu sehen ist, weicht die maschinelle Herstellung geringfügig von der manuellen Herstellung ab, dies gilt insbesondere für die in Fig. 3a gezeigte Ausgangsstellung. Charakteristisch jedoch für den Einstrangzopf ist das Durchführen eines Teigstrangendes 61 unter einen Strangbereich 11, wie in Fig. 3c gezeigt ist. Ebenfalls charakteristisch ist das Verdrehen bzw. Schwenken oder Wenden einer Schlinge 12 zu einer Form, die in Fig. 3d gezeigt ist. Durch beide Maßnahmen entstehen quasi die zwei Kreuzungspunkte 13 und 14, die in Fig. 3d gekennzeichnet sind. Im letzten Schritt wird das Teigstrangende 61 durch die Schlinge 12 geführt, wie Fig. 3e zeigt.

Oberhalb des Verarbeitungstisches 3 befindet sich der Verarbeitungskopf 2, der quasi Teil einer bekannten Schlingvorrichtung ist (vgl. WO 01/60164), die durch Programmierung einer geeigneten Programmierung einer die Schlingvorrichtung steuernden SPS (speicherprogrammierbaren Steuerung) bzw. einer frei programmierbaren Steuerung die gewünschten Bewegungsvorgänge als nacheinander geschaltete Schritte ausführt.

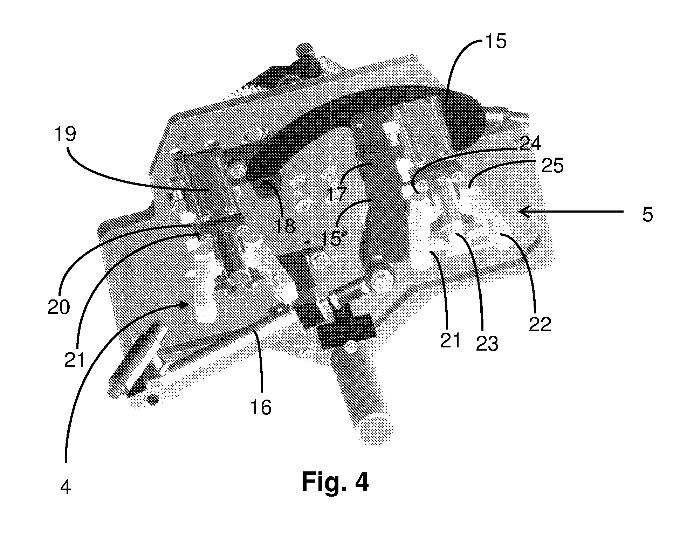

Der Verarbeitungskopf 2 besteht, wie Fig. 4 zeigt, im Wesentlichen aus einer Horizontalführung 15 mit mindestens einem Hubzylinder 16, die beide Greifer 4, 5 horizontal führt. Die Horizontalführung 15 umfasst mehrere gelenkartig verbundene Führungselemente 17, 18. Weiterhin umfasst der Verarbeitungskopf 2 für jeden Greifer 4, 5 eine Vertikalführung 19 mit mindestes einem Stellungszylinder sowie einen Drehantrieb mit einer Drehführung und einem Drehkopf 20. Mittels eines Halteteils kann die Vertikalführung 19 mit den Zylindern, dem Drehantrieb, dem Drehkopf 20 gemeinsam über den Horizontalantrieb und den Hubzylindern in Horizontalrichtung bewegt werden. Der Drehkopf 20 kann mit dem Hubzylinder und einer Linearführung in vertikaler Richtung verstellt werden. Mittels des Drehantriebes kann der Drehkopf 20 um eine vertikale Achse um 360° gedreht werden. Der Drehkopf 20 kann außerdem um vertikale Achsen geschwenkt werden.

Wie Fig. 4 ebenfalls zeigt, besteht jeder Greifer 4, 5 aus zwei Greiffingern 21, 22, die zusammengeklappt und auseinandergespreizt werden können, bzw. um die Achsen 24, 25 geschwenkt werden können, um den Teigstrang zu greifen oder loszulassen. Zwischen den Greifern ist ein Schiebeelement 23 (Abstreifer) vorhanden, das vertikal verschiebbar und dazu vorgesehen ist, um beim Öffnen der Greiffinger 21, 22 den Teig von den Greifern wegzubewegen bzw. an einer Teigmasse anzuhaften. Dies ist zweckmäßig, da der Teig ansonsten an den Greiffingern 21, 22 kleben bleiben könnte.

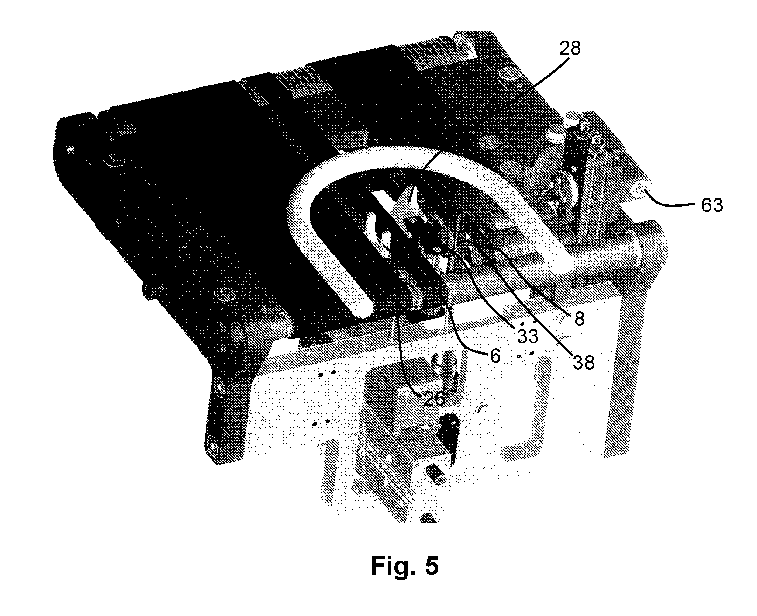

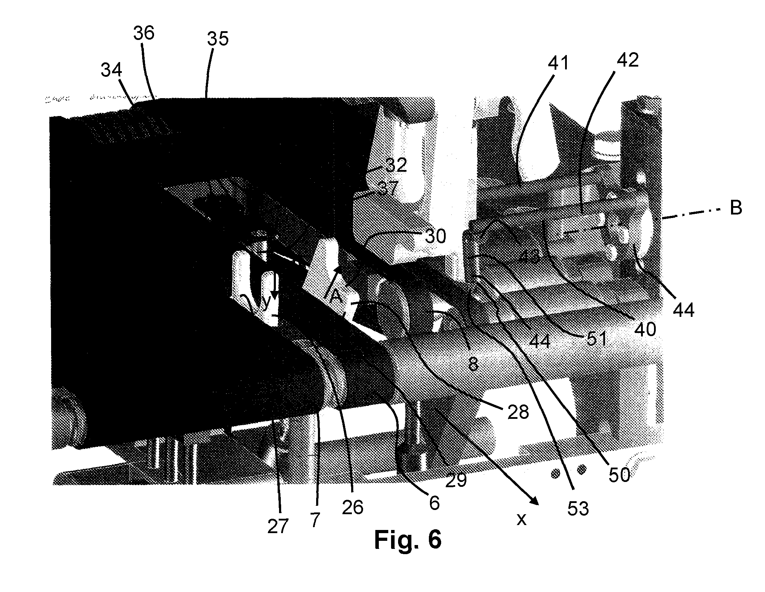

Fig. 5 zeigt den Verarbeitungstisch 3, der auch als Schlingtisch bezeichnet werden kann, wobei in Fig. 6 die Schling- bzw. Verarbeitungskomponenten vergrößert dargestellt sind.

Der Riementisch bzw. Verarbeitungstisch 3 umfasst ein U-förmiges Positionierungsmittel 26, wie die Figuren 5 und 6 zeigen, das eine senkrecht angeordnete Haltezunge 27 mit einem U-förmigen Einschnitt an ihrem freien Ende ist, wobei die Zunge 27 parallel zur Förderrichtung X des Verarbeitungstisches verläuft. Dieses Positionierungsmittel 26 dient zum Halten einer Schlaufe während der Teigverarbeitung und ist beispielsweise aus Kunststoff ausgeführt. Das Teigstrangende 62 wird durch den U-förmigen Einschnitt 26 gelegt, dessen Breite an dem Teigstrangdurchmesser angepasst ist. Die Haltezunge 27 kann in den Tisch 3 eintauchen. Der Pfeil Y zeigt die Eintauchrichtung des Positionierungsmittels 26 bzw. der Haltezunge 27. In den Figuren 5 und 6 ist die Haltezunge 27 in der Auftauchposition gezeigt. In dieser Auftauchposition liegt der Teig im Bereich dieser Halterung aber noch flach auf den Verarbeitungstisch 3 auf. Ein Eintauchen der Haltezunge 27 ist erforderlich, damit der fertig geschlungene Einstrangzopf losgelassen und weiter befördert werden kann.

Das Positionierungsmittel 26 hat aber auch eine andere Funktion, nämlich den U-förmigen Teigstrang 1 zu halten direkt nachdem der U-förmige Teigstrang 1 den Verarbeitungstisch 3 erreicht hat bzw. dort für die weitere Verarbeitung stehen geblieben ist. Die Haltezunge 27 hat eine vergleichbare Funktion, wie die im Tisch integrierten Haltestifte der WO 01/60164. Sie hält den Teig in Position. Die Haltezunge 27 unterstützt die Formgebung während des Schlingens des Teiges. Wie außerdem in Fig. 6 gut zu sehen ist, liegt die Haltezunge 27 in einer Lücke zwischen den Förderriemen 6 und 7, wobei die Förderriemen voneinander beabstandet sind. Alternativ könnte die Haltezunge 27 durch zwei Stifte ersetzt werden, die im Bereich der Schenkel plaziert wären. Die Zungenlösung hat jedoch den Vorteil, dass der Teig dort leicht nach oben versetzt plaziert werden kann.

Zwischen dem zweiten Förderriemen 6 und dem dritten Förderriemen 8 bzw. dieser Riemenanordnung oder Riemengruppe befindet sich ein Anhebemittel 28, der z.B. in Fig. 6 zu sehen ist. Das Anhebemittel 28 positioniert den Teigstrang in einer zum Tisch 3 beabstandeten Position und ist daher ebenfalls ein Positionierungsmittel 28. Das Anhebemittel 28 ist ein Haltesteg 29, der als Schieber ausgeführt ist und der in den Verarbeitungstisch 3 eintauchbar ist und soweit herausgefahren werden kann, dass der Teig mindestens um eine Teighöhe angehoben bzw. nach oben geschoben wird, damit ein Teigstrangende durchgezogen werden kann, wie später veranschaulicht ist. Im Unterschied zur Haltezunge 27 ist die Vertikalbewegung nicht um 90° gegenüber der Tischebene, sondern verläuft leicht schräg mit einer Abweichung von z.B. 10° - 45° gegenüber der Senkrechten, wie durch den Pfeil A veranschaulicht ist. Diese Neigung ist zweckmäßig, damit der Teig beim Anheben in die richtige Position geschoben wird. Am freien Ende des z.B. aus Kunststoff bestehenden Anhebemittels 28 bzw. Haltesteges 29 ist eine bogenförmige Kontur 30 vorhanden, in die der Teig gehalten wird. Wie in Fig. 5 deutlicher zu erkennen ist, ist das Anhebemittel 28 (bezüglich Förderrichtung) vor dem U-förmigen Positionierungsmittel 26 angeordnet.

Ebenfalls zwischen dem zweiten Förderriemen 6 und dem dritten Förderriemen 8 ist ein Tischgreifer 32 angeordnet. Dieser positioniert das Teigstrangende 61 bzw. zieht ihn unter einer Teigschlinge hindurch. Dieser wird als Greifermittel 33 oder Positionierungsmittel 33 (Fig. 5) bezeichnet. Dieser ist in Förderrichtung X verschiebbar, wobei der Tischgreifer 32 in Fig. 5 eine vordere Position und in Fig. 6 eine hintere Position einnimmt. Um ein Teigstrangende zu greifen, ist der Tischgreifer 32 mit zwei Greiffingern 34, 35 versehen, wie Fig. 6 zeigt, die um eine in Förderrichtung X liegende Achse gedreht bzw. zu- und aufgeklappt werden können. Zwischen den Greiffingern 34, 35 liegt eine Auflageplatte 36, in die dieses Teigstrangende aufliegen kann. Die Auflageplatte 36 wird vom Bolzen 37 gehalten und ist mit einer Linearführung verbunden. Der Tischgreifer 32 ist zwischen dem Riemen 6 und dem Riemen 8 angeordnet, wie Fig. 5 zeigt. Das Positionierungsmittel 33 ist daher als Greifermittel zum Ziehen eines Teigstrangendes ausgeführt, so dass der Teigstrang bereichsweise gedehnt und/oder gezogen wird.

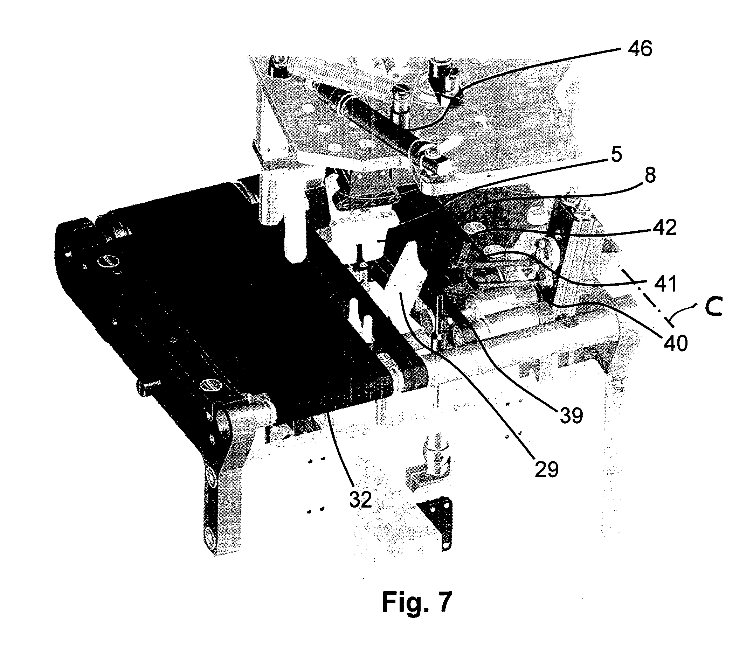

Die Fig. 7 zeigt einerseits den Schieber bzw. den Haltesteg 29, der nach oben geschoben worden ist und andererseits, dass der Tischgreifer 32 nach hinten gezogen worden ist, wobei in dieser Stellung der zweite Greifer 5, der in der Grundstellung (Fig. 1) nahe dem dritten Riemen 8 angeordnet ist, zum erneuten Greifen des Teigstranges 61 bereit ist. In Fig. 1 dagegen ist zu erkennen, dass beide Greifer 4, 5 zum Greifen des U-förmigen Teigstrangs bereit sind.

Zwischen dem Riemen 8 und dem Tischgreifer 32 bzw. dem Haltesteg 29 ist ein weiteres Positionierungsmittel 38 (Fig. 5), und zwar ein Haltestift 39 (Fig. 7) im Verarbeitungstisch 3 integriert, der in den Figuren 5 und 7 zu sehen ist. Der Haltestift 39 liegt (bezüglich Förderrichtung) nach der Haltezunge 27 und dem Haltesteg 29. Der Haltestift 39 hält eine zweite Schlinge des Teigstranges in Position, wie später näher erläutert ist. Der Haltestift 39 ist außerdem in den Verarbeitungstisch 3 vollständig eintauchbar, so dass in der Eintauchposition, in der der Stift 39 nicht aus dem Tisch 3 herausragt, das fertige Teigprodukt mittels der Riemen 6 bis 8 weiter befördert werden kann, wie bereits aus der WO 01/60164 bekannt ist.

Zweckmäßig ist es, wenn mehrere Haltestifte, insbesondere zwei Stifte 39 und 39b im Tisch integriert sind, wobei der zweite Stift in den Figuren 5 bis 8 nicht dargestellt ist aber später gezeigt und erläutert wird.

Neben dem ersten Positionierungsmittel 26, dem zweiten Positionierungsmittel 28, dem dritten Positionierungsmittel 33 und dem vierten Positionierungsmittel 38 ist auch noch ein fünftes Positionierungsmittel 40, der in den Figuren 6, 7 und 8 in unterschiedlichen Stellungen gezeigt ist, vorgesehen. Das Positionierungsmittel 40 dient zum Verdrehen einer Teigschlinge bzw. zum Verschwenken einer durch die Greifermittel 4, 5 des Verarbeitungskopfes 2 geformten Teigstrangschlinge um eine parallel zur Ebene des Verarbeitungstisches 3 angeordneten Drehachse. Diese Achse entspricht etwa einer Drehachse B, die in Fig. 6 gezeichnet ist.

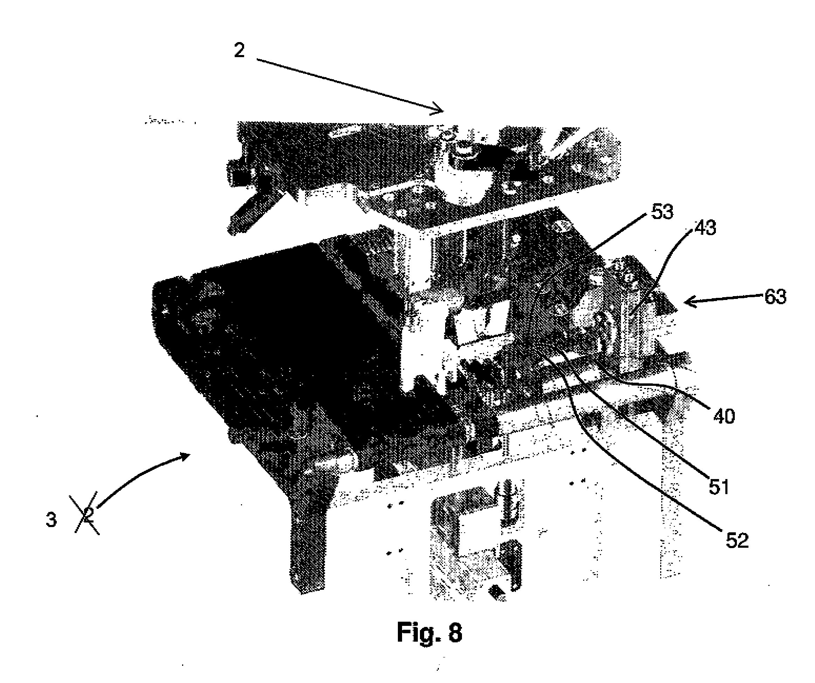

Wie die Figuren 6 bis 8 zeigen, ist das Positionierungsmittel bzw. Schwenkmittel 40 als eine Gabelaufnahme mit Gabelzinken 50 ausgeführt. Das Schwenkmittel 40 hat zwei voneinander beabstandete Haltearme 41, 42. Diese sind quer zur Förderrichtung X des Verarbeitungstisches 3 gerichtet und sind an einem ihrer Enden mit den Zinken 50 bzw. L-förmigen Haltezungen 51, 52 versehen. Jede Haltezunge 51, 52 hat in einer Grundposition gemäß der Fig. 8 einen parallel zum Tisch 3 verlaufenden Schenkel (vgl. Fig. 6) und einen senkrechten Schenkel 53. Beide Haltearme 41, 42 sind um die zu den Haltearmen beabstandete, parallele Drehachse B drehbar.

Die Haltearme 41, 42 sind außerdem an den gegenüberliegenden Enden der Haltezungen 51, 52 an einer Lagerung 44 fixiert. Ein Drehantrieb dreht die Arme 41, 42 um 180°, so dass entweder die Zinken 50 nach oben zeigen, wie in Fig. 8 gezeigt ist, oder nach unten zeigen, wie in Fig. 6 gezeigt ist. Die Haltearme 41, 42 sind zudem zur Achse B beabstandet, so dass beide Arme 41, 42 und die Achse B quasi ein Dreieck bilden.

Weiterhin sind die Arme 41, 42 um eine in Förderrichtung des Verarbeitungstisches 3 gerichtete Achse C kippbar, wie ein Vergleich der Figuren 7 und 8 zeigt. Dadurch entsteht eine Auf- und Ab-Bewegung der Haltearme 41, 42 bzw. der Haltezungen 51, 52 bzw. des Zinkens 50. Hierfür ist die Lagerung 44 mit einem Kippelement 45 bzw. Drehantrieb 63 verbunden, der an dem Verarbeitungstisch 3 befestigt ist. Das Element 45 umfasst einen pneumatischen Zylinder bzw. einen Drehzylinder. Die Haltearme 41, 42 haben die Aufgabe den Teig so zu verarbeiten, dass eine Teigschlinge vom Tisch angehoben wird, quasi "in der Luft" gewendet wird und dann wieder auf den Tisch 3 gelegt wird. Die Kippbewegung wird durch einen Drehantrieb 63 bzw. das Kippelement 45 erreicht.

Eine Positionierung des Teiges oder Teigverarbeitung beinhaltet Vorgänge wie Fixieren des Teiges (vgl. z.B. Mittel 26), Anheben des Teiges (vgl. Mittel 28), Formen des Teiges durch Ziehen des Teiges (vgl. Mittel 33), Halten bzw. Stützen des Teiges (vgl. Mittel 38, 40) oder durch Schwenken bzw. Verdrehen des Teiges (vgl. Mittel 40).

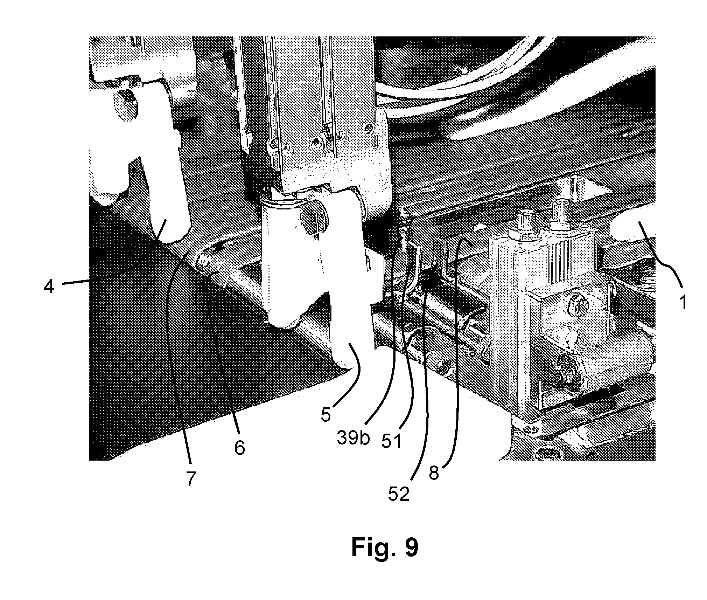

In den nachfolgenden Figuren wird die Herstellung bzw. Formgebung des Einstrangzopfes näher erläutert. Die Figuren 9 bis 31 veranschaulichen insbesondere die Verfahrensschritte zum Verarbeiten des Teigstranges 1 aus dem U-förmig gebogenen Teigstrang, bei dem mittels des zwei Greifermittel 4, 5 umfassenden Verarbeitungskopfes 2 und des verschiedene Verarbeitungsfunktionen aufweisenden Verarbeitungstisches 3 der Einstrangzopf gemäß Fig. 2 geformt wird.

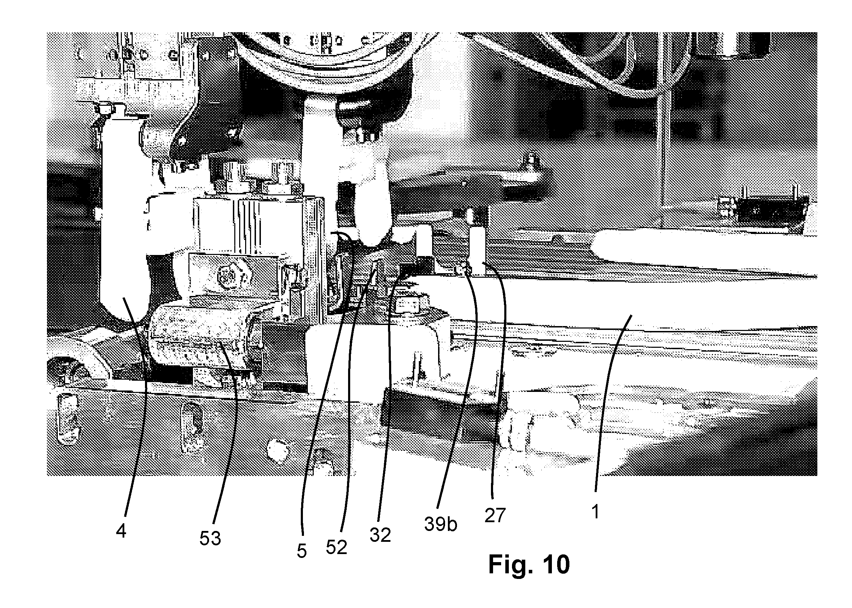

Jede Figur 10 bis 31 zeigt jeweils eine nachfolgende Stellung der vorhergehenden Figur.

In Fig. 9 ist gezeigt, wie ein U-förmiger Teigstrang 1 dem System 100 zugeführt wird und durch die Förderriemen 6 bis 8 in Richtung der geöffneten Greifer 4, 5 des Kopfes 2 bewegt wird. Hier sind der zweite Haltestift 39b sowie eine hintere Haltezunge 52 der Gabelaufnahme zu sehen. Der zweite Haltestift 39b ist in der vorderen Position. Die Haltearme 41, 42 sind nach unten geklappt, wobei die senkrechten Schenkel der Haltezungen 51, 52 nach oben zeigen.

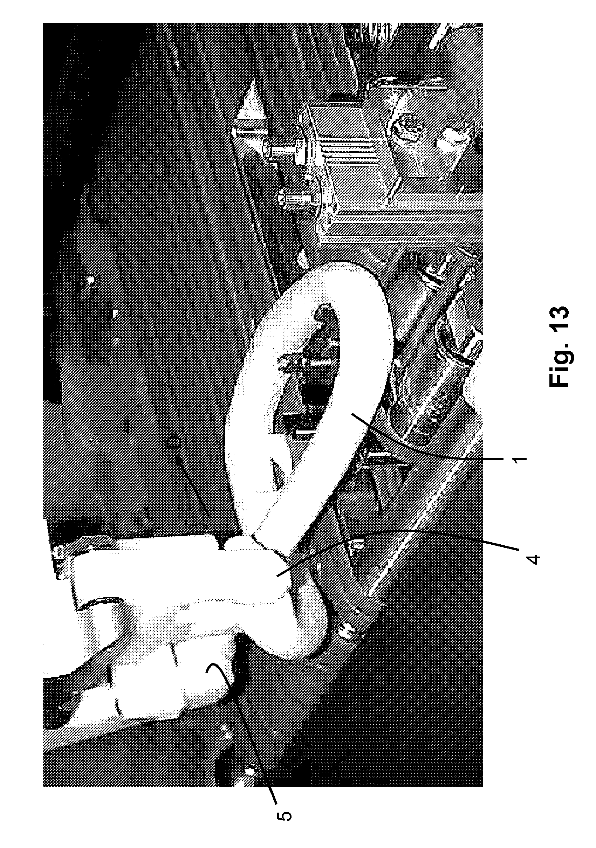

Fig. 10 zeigt, dass der Teigstrang 1 zu den Greifern 4, 5 bewegt wird und dass die Haltezunge 27 bereits ausgefahren ist. Die Haltezunge 27 hat eine Haltefunktion für eine erste Schlinge des Teigstranges, wie z.B. in Fig. 13 zu sehen ist. Weiterhin ist der Tischgreifer 32 zu sehen.

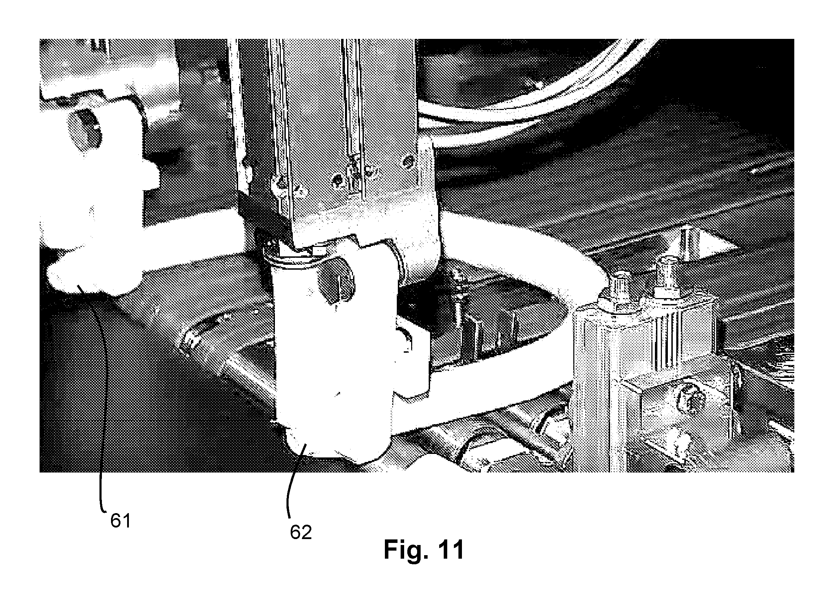

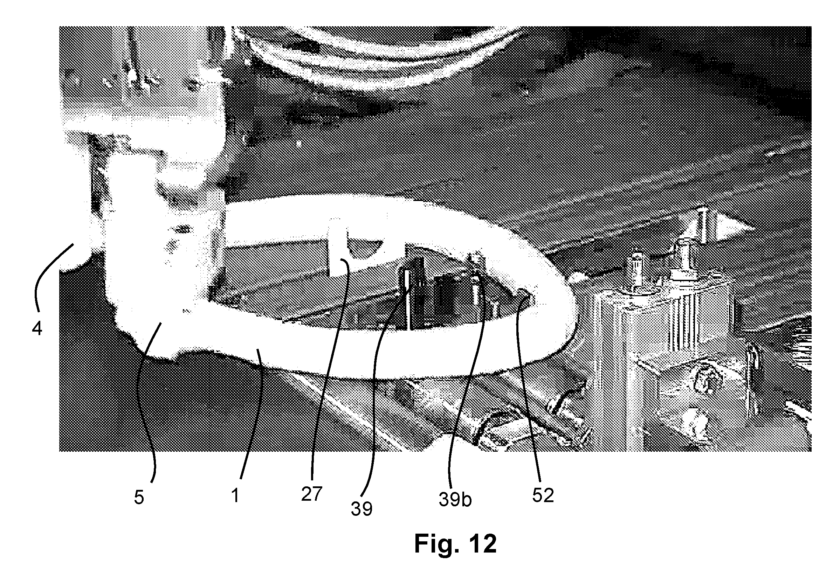

Fig. 11 zeigt, dass die Greifer 4, 5 die Enden 61 und 62 des Teigstranges 1 greifen. Von dieser Greifstellung aus erfolgt eine Hubbewegung der Greifer 4, 5 nach oben sowie eine sich überkreuzende Schwenkbewegung der Greifer 4, 5, wie durch die Figuren 12 und 13 veranschaulicht ist. Die Schwenkbewegung wird durch die Hubzylinder 16 und 46 (Fig. 4 und Fig. 7), der die beide Greifer 4, 5 horizontal führt, erreicht.

In den Figuren 12 und 13 ist gut zu sehen, dass der Teigstrang 1 an der Haltezunge 27, dem zweiten Haltestift 39b und der L-förmigen Haltezunge 51/52 der Gabelaufnahme anliegt. D.h. zumindest ein Teil der Verarbeitungselemente 27, 39b, 52 hat eine Anlagefunktion. Der erste Haltestift 39, der die Aufgabe hat, einen Teigbogen zu erhalten, wird ausgefahren bevor Teigstrang 1 vollständig die Elemente 27, 39b, und 52 erreicht, d.h. kurz vor der in Fig. 12 gezeigten Stellung bzw. zwischen der Stellung in Fig. 11 und Fig. 12.

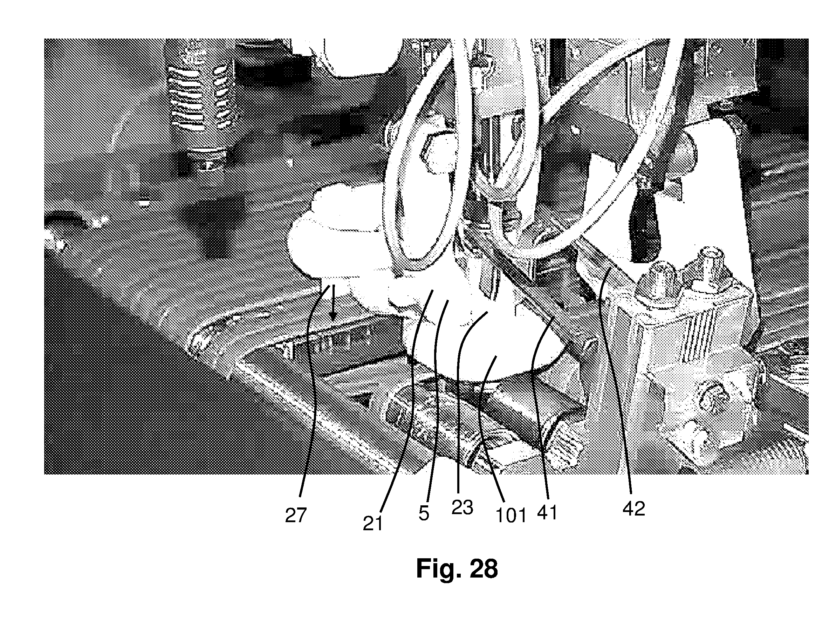

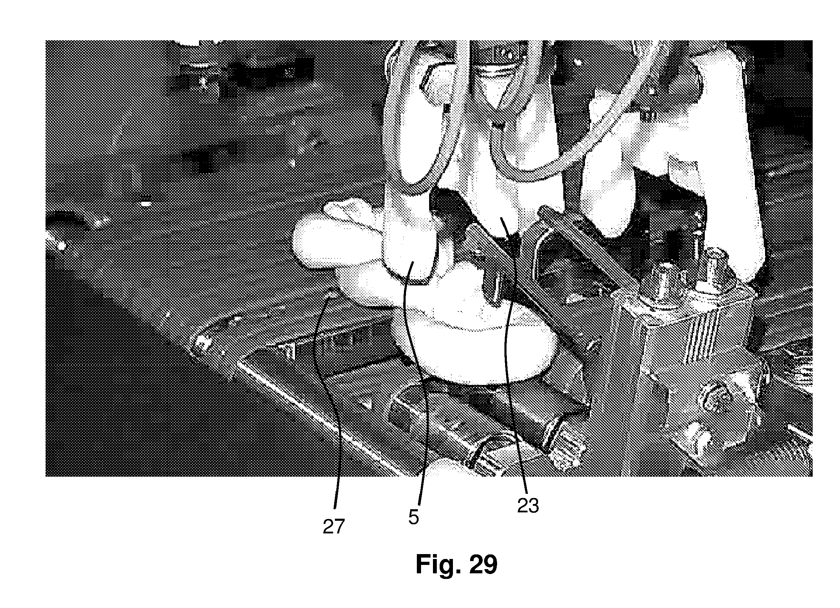

Fig. 12 zeigt auch, dass am Verarbeitungstisch 3 das U-förmige, Positionierungsmittel 27 zum Fixieren des Teigstrangendes 62 während der Teigverarbeitung vorhanden ist, wobei dieses Positionierungsmittel 27 in den Verarbeitungstisch eintauchbar ist, wie Fig. 28 bzw. Fig. 29 zeigen.

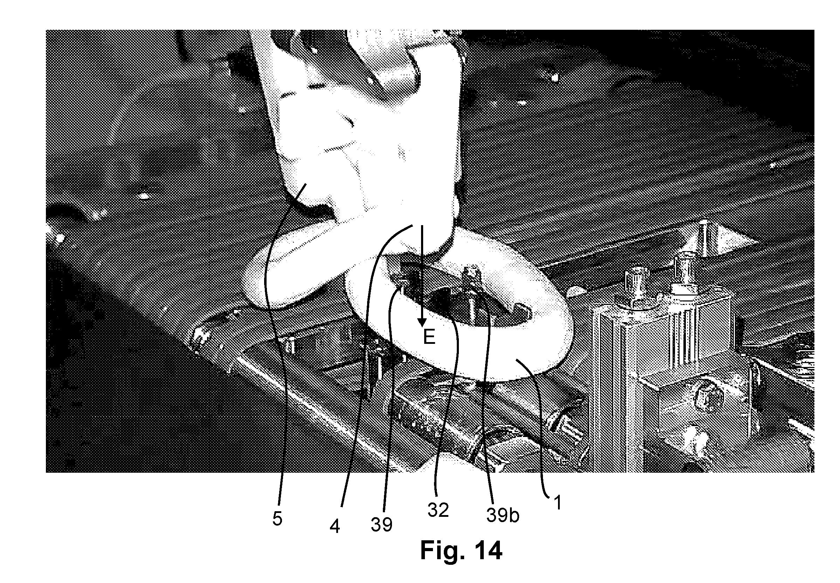

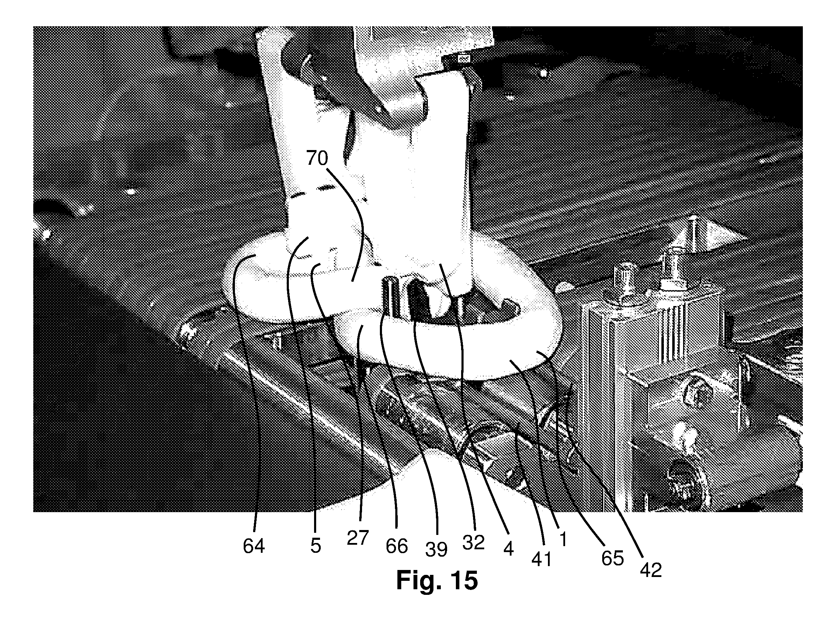

Durch eine Rückwärtsbewegung beider Greifer 4, 5, wie Fig. 14 zeigt und durch den Pfeil D in Fig. 13 angedeutet ist, sowie einer Senkbewegung der Greifer 4, 5, wie Fig. 15 zeigt und in Fig. 14 durch den Pfeil E angedeutet ist, wird eine brezelartige Grundform des Teigstrangs 1 erreicht. Die Senkbewegung der Greifer 4, 5 wird durch eine Senkbewegung des Verarbeitungskopfes 2 mit einem Antrieb erreicht.

In dieser Grundform hat der Teigstrang 1 eine erste, der Haltezunge 27 nahe Schlinge 64 und eine zweite, den Haltearmen nahe Schlinge 65. Die zweite Schlinge wird durch die Haltestifte 39, 39b, 50 und 51 in Form gehalten, wie die Figuren 14 und 15 zeigen.

Die 90° Schwenkbewegung ist für den zweiten Greifer 5 wichtig, damit das Teigstrangende 62 (vgl. Fig. 11 und 15) von einer in Förderrichtung liegenden Position in eine quer liegende Position gedreht wird, so dass dieses Ende 62 in die Haltezunge 27, und zwar in den U-förmigen Einschnitt gelegt werden kann (Fig. 15). Beim Einlegen in die Haltezunge kann das Teigstrangende 62 im Bereich der Schlinge 64 auf den Teigstrang abgelegt und mittels des Schiebeelements 23 im Greifer 5 zur Fixierung auf den Teigstrang aufgedrückt werden. Hierbei wird das Ende 62 um 90° gedreht. Diese Greiferbewegung ist aber auch wichtig, damit das erste Ende 61 um 180° gedreht wird und damit dieses lagerichtig in den Tischgreifer 32 durch den ersten Greifer 4 gelegt werden kann, wie Fig. 15 zeigt. Während in Fig. 14 der Tischgreifer 32 noch geöffnet ist, ist dieser bereits in Fig. 15 mit seinen Greiffingern 34, 35 (Fig. 6) geschlossen.

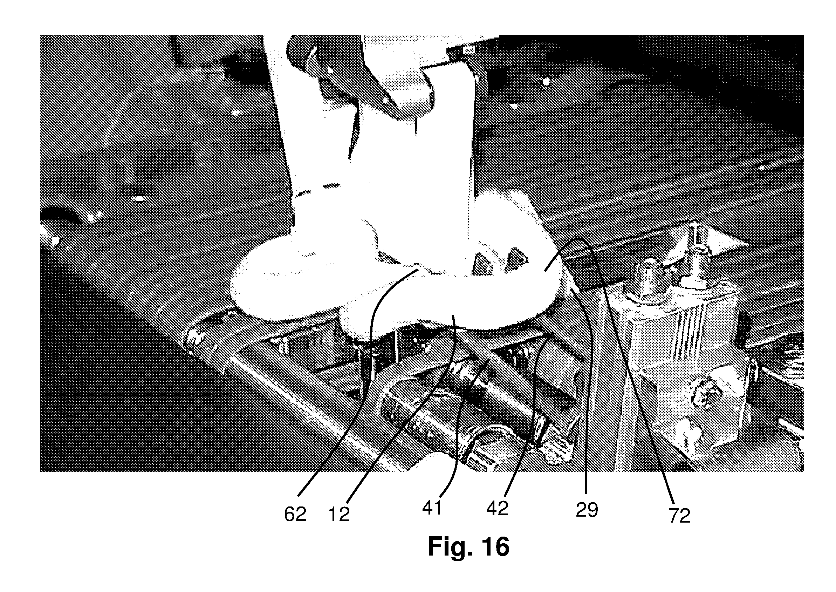

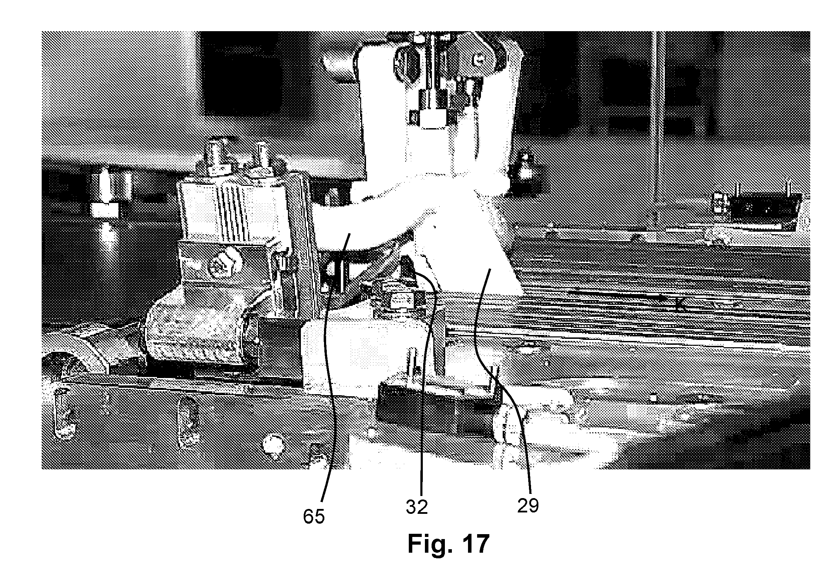

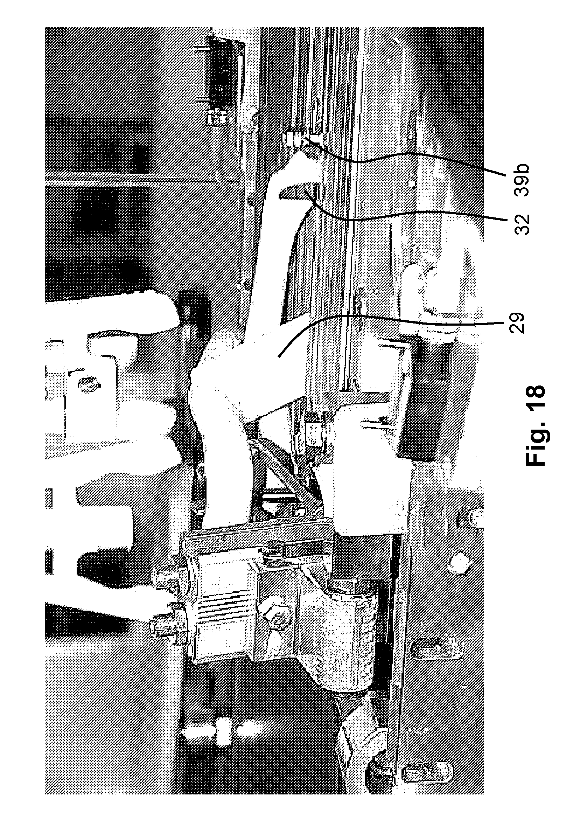

Die Figuren 16 und 17 veranschaulichen einen Anhebevorgang, bei dem die zweite Schlinge 65 mittels des Haltesteges 29 und der Haltearme 41, 42 angehoben wird. Wie in Fig. 17 zu sehen ist, wird die Schlinge 65 im Bereich des Tischgreifers 32 soweit angehoben, so dass das erste Ende 61 ungehindert in Pfeilrichtung K durch den Tischgreifer 32 gezogen werden kann, was in Fig. 18 deutlich zu sehen ist. Hierbei verhindert der erste Haltestift 39, dass ein unten liegender Teigbereich 66 (vgl. Fig. 15) durch das Ziehen des Tischgreifers mitgezogen wird.

Die Fig. 16 und 17 veranschaulichen also, dass die Positionierungsmittel 29, und 41, 42 bzw. 40 als Anhebemittel zum Anheben des Teigstrangbereichs 72 in einer Anhebungsposition ausgeführt ist, so dass der Teigstrang 1 gegenüber dem Formtisch bzw. Verarbeitungstisch 3 bereichsweise angehoben ist.

Der zweite Haltestift 39b ist mit den linear verschiebbaren Greifern verbunden und ist ebenfalls linear verschiebbar, wie Fig. 18 zeigt. Dadurch muss der zweite Stift 39b nicht in den Tisch 3 eingetaucht werden, weil dieser, wie der Tischgreifer 32 auch, beim Weitertransportieren des Fertigteigprodukts hinter dem Einstrangzopf liegt. Fig. 18 zeigt auch, dass das Positionierungsmittel 33 als Greifermittel zum Ziehen eines Teigstrangendes ausgeführt ist, so dass der Teigstrang bereichsweise gedehnt und/oder gezogen wird.

Fig. 18 zeigt also, dass hier nur ein Positionierungsmittel als ein Haltestift 39b ausgeführt ist, der in den Verarbeitungstisch 3 nicht eintauchbar ist. Alternativ könnte auch anstelle des Stiftes 39b auch ein in den Tisch eintauchbarer Stift vorgesehen sein.

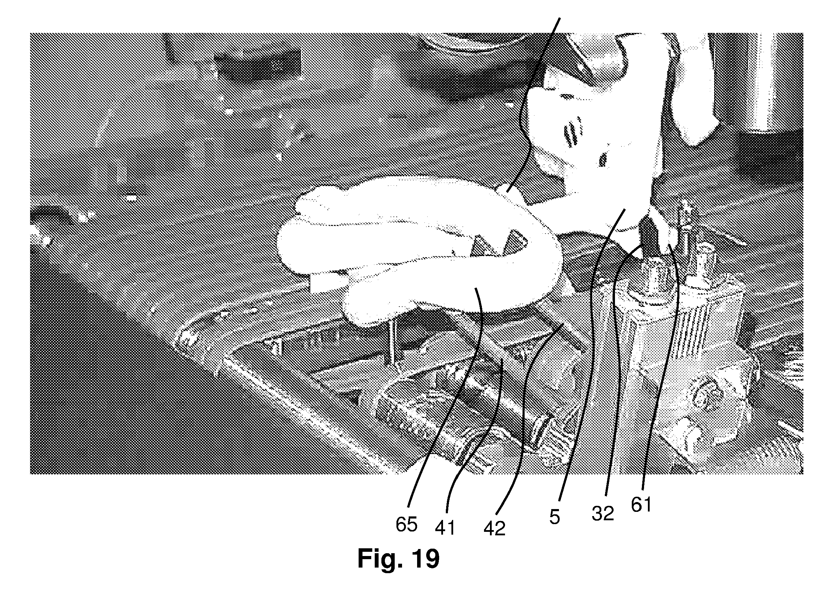

In Fig. 19 ist zu erkennen, dass der zweite Greifer 4 5 das erste Ende des Teigstrangs 61 greift, während das Ende 61 noch vom Tischgreifer 32 gehalten wird. Gleichzeitig halten der Haltesteg 29 und die Haltearme 41, 42 die zweite Schlinge 65 in der oberen Position. Hierbei sind die Haltearme 41, 42 nach oben gekippt.

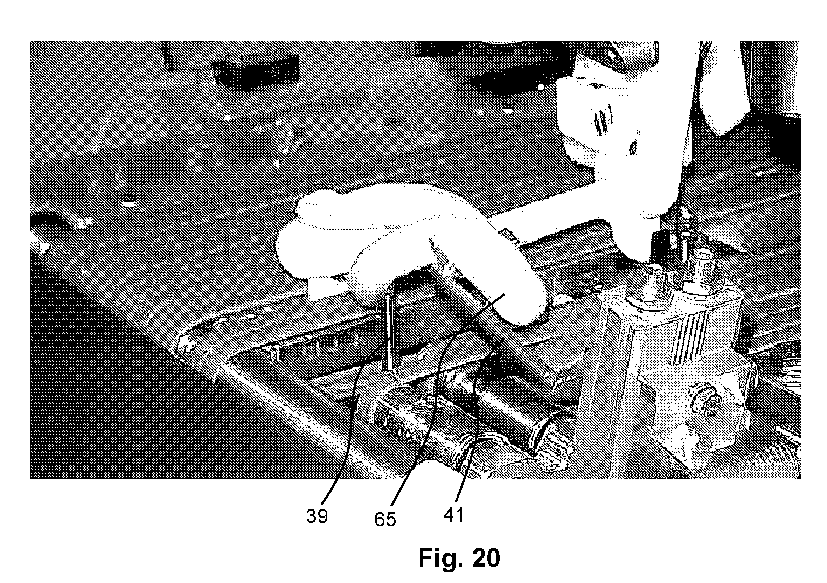

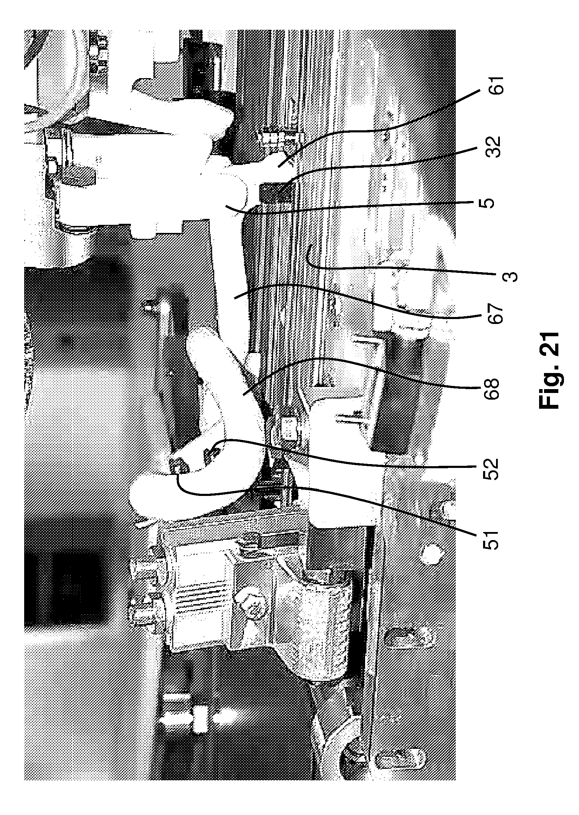

In Fig. 20 ist einerseits eine Öffnungsbewegung des Tischgreifers 42 sichtbar und andererseits eine Schwenkbewegung bzw. ein Verdrehen der zweiten Schlinge 65 erkennbar. Das Drehen der Schlinge 65 erfolgt durch Drehen der Haltearme um die eingangs erwähnte Achse B (Fig. 6). Die Arme 41, 42 haben sich in dieser Darstellung um etwa 45° gedreht. Durch die an den freien Enden der Arme 41, 42 befestigten L-förmigen Zungen 51, 52, dessen horizontale Schenkel entgegengesetzt gerichtet sind, liegt die Schlinge fest in den Armen 41, 42. Der Tischgreifer 32 ist bereits in dieser Stellung geöffnet. Vorzugsweise öffnet der Tischgreifer 32 etwa zu Beginn der Schwenkbewegung der Arme 41, 42. In Fig. 20 ist der Haltestift 39 noch zu sehen. Dieser muss jedoch eingefahren werden, um einen späteren Weitertransport des Teigproduktes zu ermöglichen. Das Einfahren des Haltestiftes 39 erfolgt zwischen der Stellung gemäß Fig. 20 und Fig. 21. Der Haltesteg 29 wird vor der Drehung der Schlinge 65 bereits in den Tisch eingefahren.

Die Fig. 21 zeigt weiterhin eine Verdrehung der zweiten Schlinge 65 um nahezu 90°. Zu erkennen ist außerdem, dass der Teigbereich 67 zwischen dem Teig-Grundkörper 68 und dem Greifer 5 einen Abstand zum Verarbeitungstisch 3 hat.

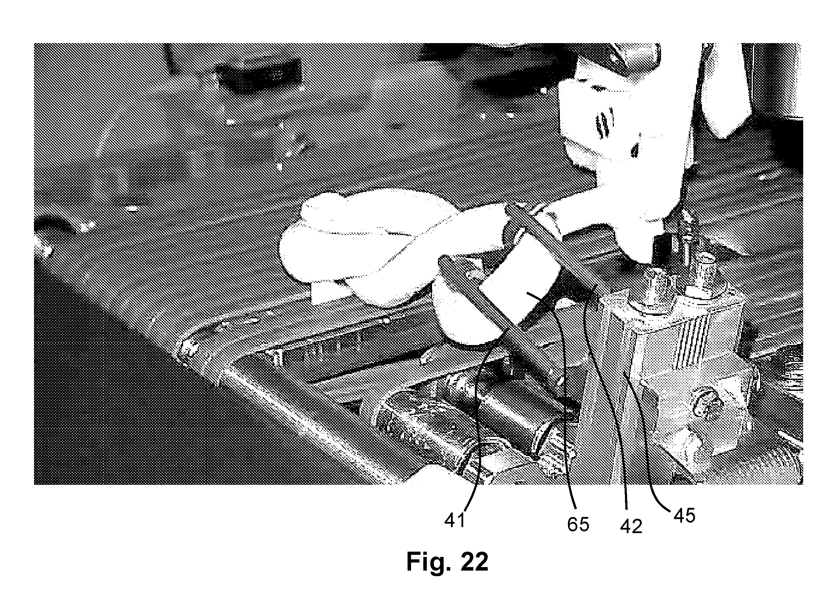

In Fig. 22 wird eine weitere Drehung der zweiten Schlinge 65 gezeigt, wobei der Winkel der Drehung nun etwa 135° beträgt. Hierbei sind die Arme 41, 42 noch nach oben gekippt, was aus der Stellung des Kippelementes 45 erkennbar ist.

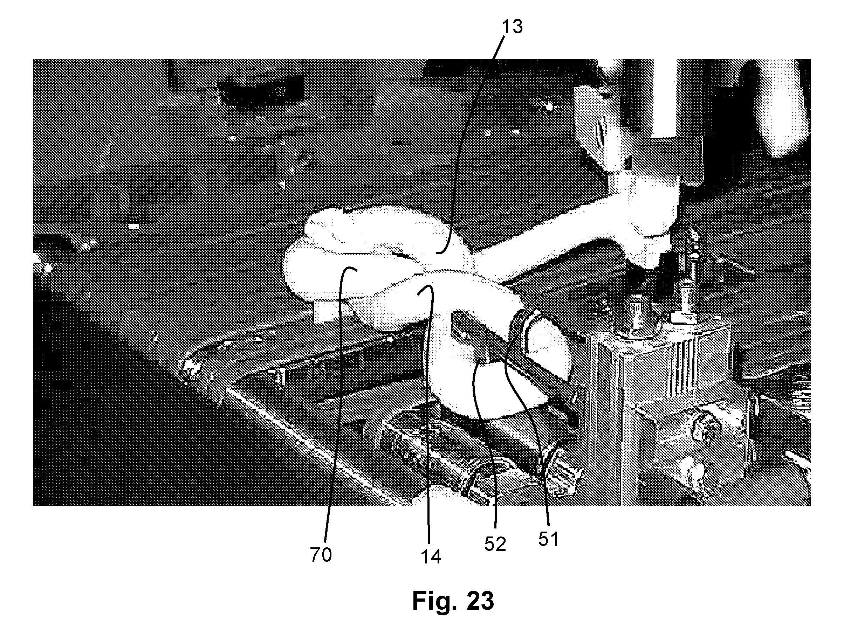

In Fig. 23 hat die Schwenkbewegung einen Winkel von 180° erreicht, wobei die Arme 41, 42 nach unten gekippt worden sind. Hier ist die Bildung der typischen Schlaufe erkennbar. Dadurch kann der von den L-förmigen Zungen 51, 52 gehaltene Bereich nach unten fallen. Die senkrechten Schenkel der L-förmigen Zungen 51, 52 zeigen nach unten. Bereits an diesen Stellen entstehen Teig-Kreuzungspunkte 13, 14, 70 analog zum Zopf gemäß der Fig. 2.

Die Figuren 19 bis 23 zeigen daher, dass das Positionierungsmittel 40 (Haltearme 41, 42) als Schwenkmittel zum Verschwenken einer durch die Greifermittel 4, 5 des Verarbeitungskopfes 2 geformten Teigstrangschlinge 65 um eine parallel zur Ebene des Verarbeitungstisches 3 angeordneten Drehachse ausgeführt ist.

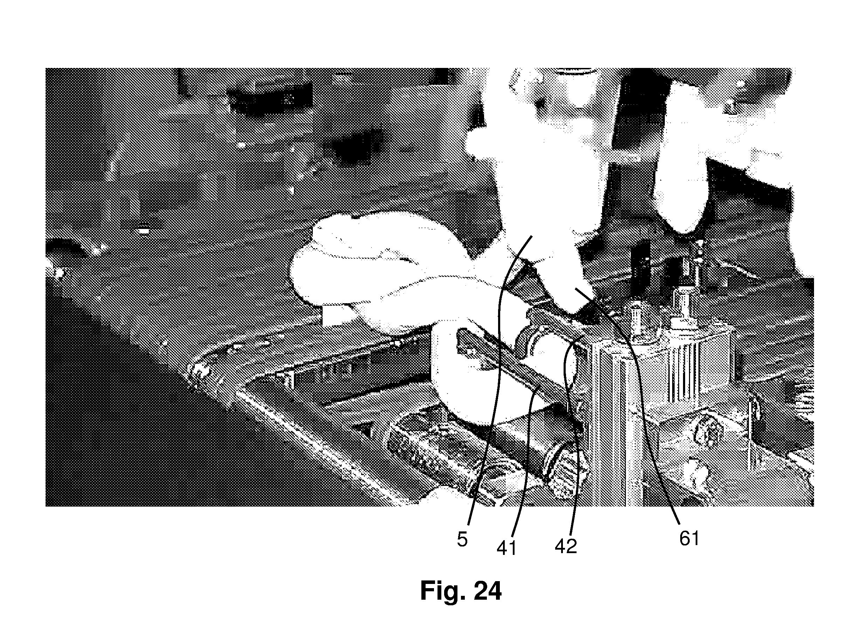

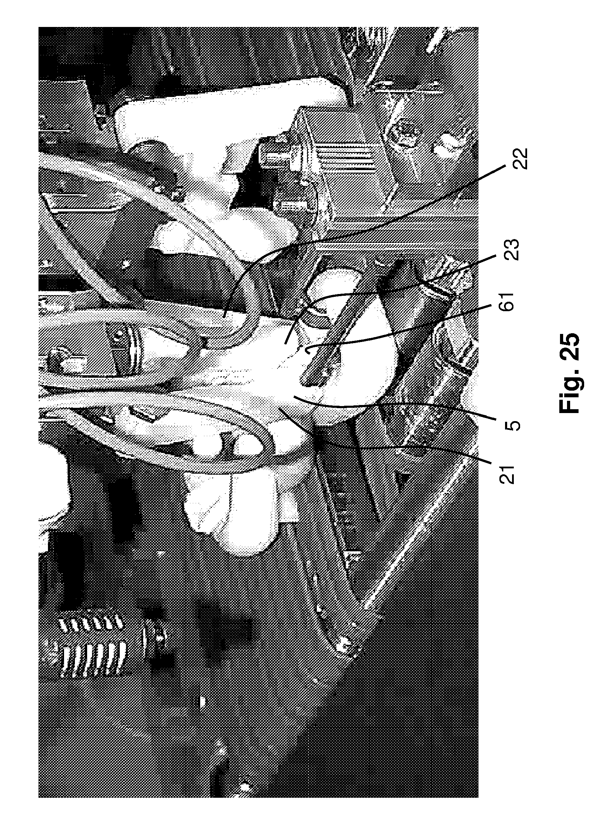

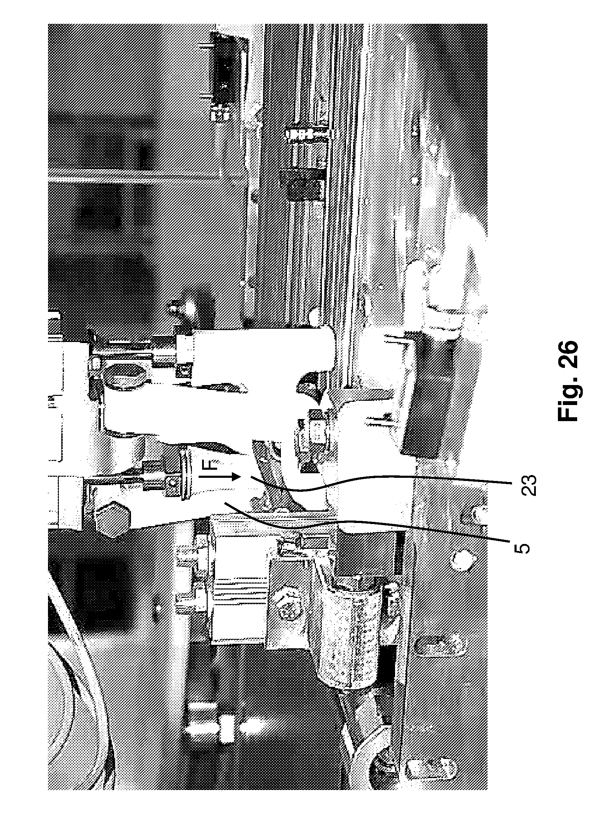

Das erste Ende 61 wird anschließend durch den Greifer 5 nach vorne bewegt, d.h. in Richtung der Arme 41, 42, wie Fig. 24 zeigt, bis das erste Ende 61 über der zweiten Schlinge 65 bzw. zwischen den Armen 41, 42 liegt, wie Fig. 25 zeigt. Gleichzeitig senkt sich der Greifarm 5. Um das Ende in den Schlingenbereich hinein bzw. hindurchzudrücken, senkt sich anschließend das Schiebeelement 23 des Greifers 5, was in Fig. 26 gut zu sehen ist und durch Pfeil F veranschaulicht ist. Dabei kann das Schiebeelement 23 bis in den Schlingenbereich eintauchen und zumindest teilweise durch die Schlingenöffnung hindurchtreten. Hierbei ist auch zu erwähnen, dass das Schiebeelement 23 des zweiten Greifers 4 ebenfalls nach unten bewegt wird, um das zweite Ende 62, nachdem es in die Haltezunge 27 gelegt worden ist, an die erste Schlinge 64 zu drücken, was in etwa im Zeitbereich der Fig. 15 geschieht. Das Betätigen der Schieber 23 erfolgt etwa gleichzeitig mit der Spreizbewegung der Greiffinger 21, 22 (Fig. 4, Fig. 25).

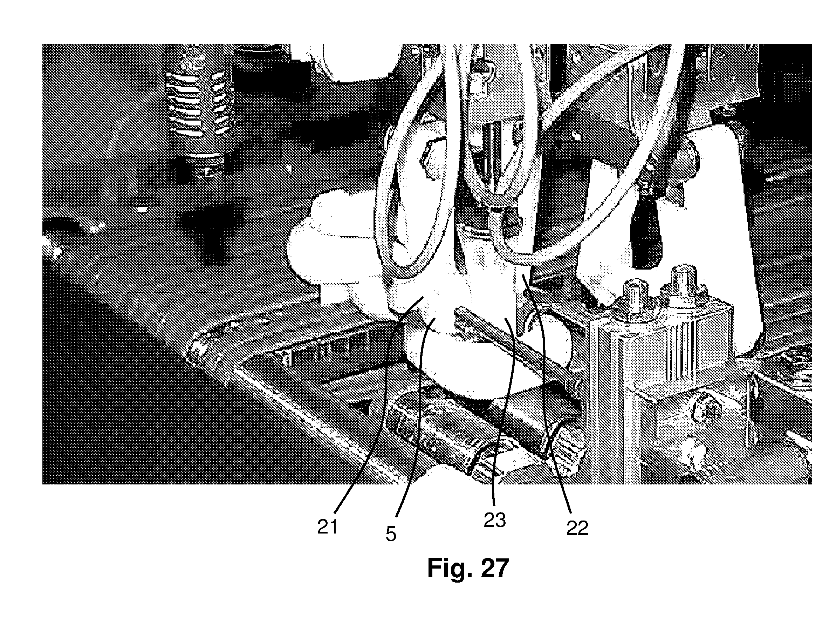

Die Bewegung des Schiebeelementes 23 des zweiten Greifers 5 ist auch in Fig. 27 zu sehen. Bei dieser Darstellung ist aber deutlich zu sehen, dass die Haltearme 41, 42 nach unten gekippt sind, wohingegen diese in Fig. 28 nach oben gekippt sind, um den Teigstrang 1 loszulassen, wobei das fertige Teigprodukt dort gut zu sehen ist. Der Greifer 5 bleibt hierbei in der Position direkt über und an der Schlinge anliegend, um den Teigstrang somit in lotrechter Richtung am Verarbeitungstisch zu fixieren und ein Abheben der Schlinge beim Herausziehen der L-förmigen Zungen 51, 52 zu verhindern.

Als nächstes wird der Greifer 5 zusammen mit seinem Schiebeelement 23 hochgefahren, wie Fig. 29 zeigt. Damit steht der fertige Einstrangzopf zum Transport mittels der Förderriemen 6 bis 8 bereit. Ein Vergleich der Figuren 28, 29 zeigt, dass in dem Zeitraum zwischen beiden gezeigten Stellungen die Haltezunge 27 eingetaucht ist (vgl. Pfeil in Fig. 28), so dass ein Weitertransport des Teigproduktes dann möglich ist.

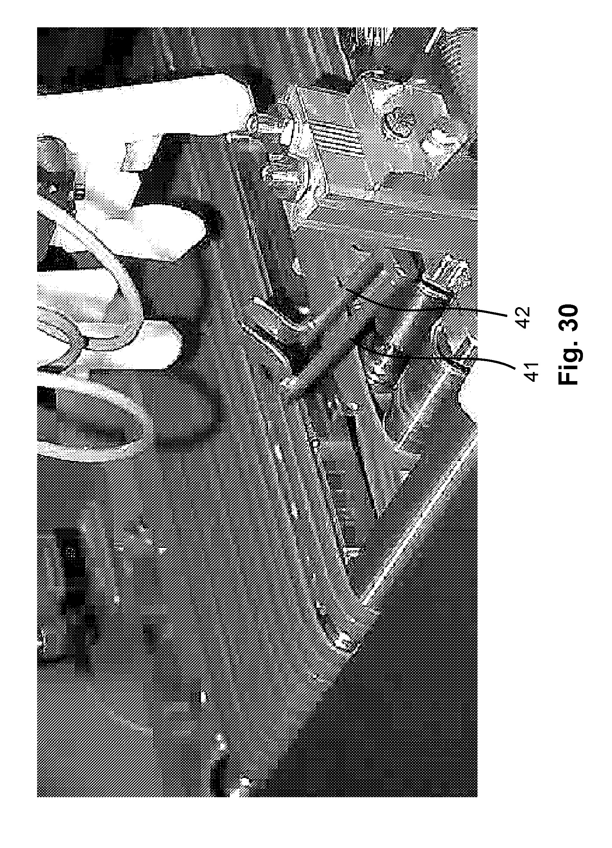

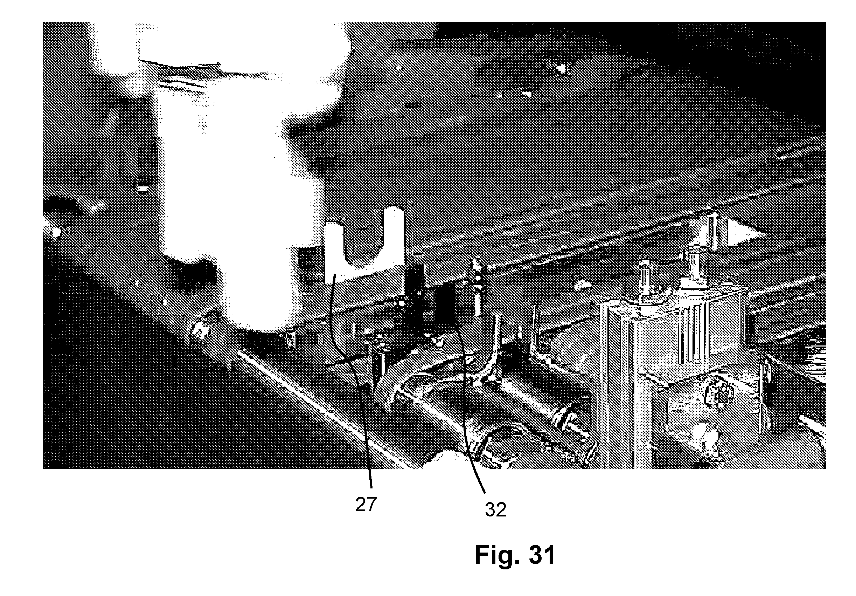

In Fig. 30 ist zu sehen, dass der Einstrangzopf bereits weiterbewegt worden ist, wobei dann Elemente 41, 42, 27, 32 ihre Grundstellung einnehmen, was in Fig. 31 zu sehen ist.

In Fig. 30 ist zu sehen, dass die Haltezunge 27 eingetaucht ist und in Fig.31 ist zu sehen, dass sie wieder auftaucht. Der Tischgreifer 32 wird ebenfalls in seine Grundstellung, nahe den Armen 41, 42 bewegt (Fig. 31). Die Arme 41, 42 befinden sind in der Grundstellung etwa in der Tischebene, wobei die Schenkel der L-förmigen Haltezungen 51, 52 nach oben zeigen.

Das beschriebene Herstellungsverfahren umfasst:
- Einen Teigstrang-Zuführungsschritt, bei dem der U-förmige Teigstrang 1 dem Verarbeitungstisch 3 zugeführt wird, wie die Figuren 9 und 10 zeigen.
- Einen Verarbeitungsschritt, wie die Figuren 11 bis 15 zeigen, bei dem aus dem U-förmigen Teigstrang 1 aus einer sich überkreuzenden Teigbewegung mittels der Greifer 4, 5 eine etwa brezelartige Grundform (Fig. 15) mit der ersten Schlinge 64 und der zweiten Schlinge 65 geformt wird, wobei aber der Teigstrang im Kreuzungspunkt 70 (vgl. Fig. 3b) nicht geschlungen bzw. nicht verknotet ist.
- Einen ersten Fixierungsschritt, wie die Figuren 15 oder Fig. 16 zeigen, bei dem das zweite Ende 62 des Teigstranges 1 am Verarbeitungstisch 3 und/oder an der Teigschlinge 64 fixiert wird, und zwar mittels des U-förmigen Positionierungsmittels 27 bzw. des Greifers 5.
- Einen zweiten Fixierungsschritt, bei dem der Teilstrang 1 im Bereich der dem ersten Ende 61 gegenüberliegenden, zweiten Schlinge 65 am Verarbeitungstisch 3 fixiert wird, und zwar durch den Haltestift 39 sowie den Stift 39b aber auch durch die Haltearme 41, 42 bzw. der L-förmigen Haltezungen 51, 52, wie Fig. 15 zeigt.
- Einen Anhebeschritt, bei dem der Teilstrang 1 im Bereich der zweiten Schlinge 65 angehoben wird, wie die Figuren 16 bis 18 veranschaulichen. Dieser Schritt erfolgt mindestens durch die Anhebemittel 41, 42 und durch das linear geführte Anhebeelement 29.
- Einen Greifschritt, wie die Figuren 17 bis 19 zeigen, bei dem das erste Ende von dem am Verarbeitungstisch 3 angeordneten Greifermittel 32 bzw. 33 gegriffen wird und zwischen dem Verarbeitungstisch 3 und dem Teilstrangbereich 72 (Fig. 16) durchgezogen wird.
- Einen weiteren Greifschritt, bei dem das erste Ende 61 von dem am Verarbeitungskopf 3 angeordneten Greifermittel 5 gegriffen wird, wie die Figuren 19 und 20 zeigen.
- Einen Schwenkschnitt mittels der Arme 41, 42, bei dem die zweite Schlinge 65 um etwa 180° um eine quer zur Förderrichtung des Verarbeitungstisches angeordnete Achse in der angehobenen Position geschwenkt wird, wobei der Teig nun sich anschließend an zwei Stellen überkreuzt, wie die Figuren 20 bis 23 zeigen.
- Einen Teig-Bewegungsschritt, bei dem die zweite Schlinge 65 wieder auf den Verarbeitungstisch 3 gelegt wird, wie die Figuren 22 und 23 zeigen. Dieser Schritt erfolgt durch Kippen der Haltearme 41, 42.
- Einen weiteren Teig-Bewegungsschritt, bei dem das erste Teigende 61 in die zweite Schlinge 65 gelegt wird, wie die Figuren 22 bis 27 zeigen. Dieser Schritt erfolgt durch den Greifer 5.

Die Bewegungsabläufe der Verarbeitungsmittel 27, 29, 32, 39, 39b, 41, 42 des Verarbeitungstisches wird durch die SPS gesteuert, die auch den Verarbeitungskopf 2 steuert. Ebenso möglich ist der Einsatz von Sensoren mit dessen Hilfe die Positionen und Bewegungen des Teigstranges 1 am Verarbeitungstisch 3 erkannt werden können. Die Bewegungsabläufe der Verarbeitungsmittel 27, 29, 32, 39, 39b, 41, 42 können pneumatisch (z.B. mittels Ventile) und/oder elektrisch gesteuert werden.

Die Erfindung ist nicht auf dieses Beispiel beschränkt, so könnte alternativ zu den beiden Haltearmen 41, 42 auch ein anderes Halteelement verwendet werden, das an seinem freien Ende z.B. eine Aussparung hat, damit das Ende des Teigstranges fixiert werden kann. Auch könnten anstatt der L-förmigen Zungen Stifte oder andere Stege verwendet werden. Auch könnten die Greiferarme des Tischgreifers 32 anstelle, dass sie eine nach oben zeigende Ausrichtung haben, auch nach vorne gerichtet sein, so dass die Greifarme senkrecht zur Tischebene schwenken. Der Einsatz von mehreren Tischgreifern ist ebenso möglich. Die Anzahl der Haltestifte ist auch nicht auf zwei beschränkt. So könnten drei oder mehr als drei Stifte am Tisch vorhanden sein. Alternativ zu den U-förmigen Positionierungsmitteln könnten zwei nebeneinander liegende Stifte verwendet werden oder andere Fixierungsteile verwendet werden.

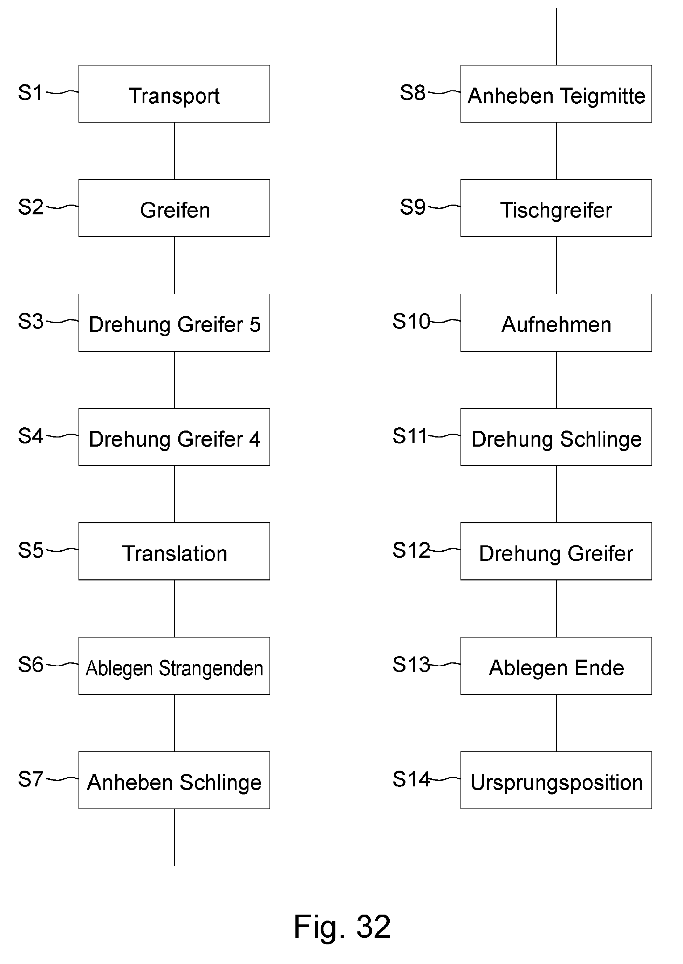

Figur 32 zeigt ein Ablaufschema des erfindungsgemäßen Verfahrens mit allen Verfahrenschritten. Der Teigstrang 1 wird in U-Form zum Verarbeitungsbereich befördert, wobei er durch die Haltestifte 39 B und die Schenkel der Haltezungen 27, 51, und 52 gestoppt und fixiert wird. Im nächsten Schritt S2 greifen die Greifer 4 und 5 die Teigstrangenden 61 und 62. Danach dreht sich der Greifer 5 um 90°, wobei das Teigstrangende 62 weiterhin durch den Greifer 5 gehalten wird. Darauf folgt eine 180°-Drehung des Greifers 4 mit dem Teigstrangende 61 um den Greifer 5 herum (Schritt S4). Nach Beendigung der Drehbewegung des Greifers 4 werden die Greifer 4 und 5 gemeinsam entgegen der Förderrichtung des U-förmigen Teigstrangs 1 bewegt (Schritt S5), um die Teigstrangenden 61 und 62 später ablegen zu können. Dabei legt der Greifer 4 das Teigstrangende 61 im Tischgreifer 32 ab und der Greifer 5 das Teigstrangende 62 in der Haltezunge 27 ab (Schritt S6).

Um das Teigstrangende 61 durch die Schlinge 12 hindurch ziehen zu können wird als Schritt S6 während des Ablegens der Teigstrangenden 61 und 62 die Schlinge 12 mittels der Haltezungen 51 und 52 des Drehantriebs 63 durch eine Kippbewegung des Drehantriebs 63 angehoben (Schritt S7).

Danach wird der Strangbereich 11 mit dem Haltesteg 29 angehoben (Schritt S8), wonach der Tischgreifer 32 das Teigstrangende 61 durch die Schlaufe 12 zieht (Schritt S9).

Danach werden die Greifer 4 und 5 derart bewegt, dass der Greifer 5 das Teigstrangende 61 im nächsten Schritt S10 aufnehmen kann. Danach wird die Schlinge 12 durch eine Drehbewegung der Haltezungen 51 und 52 im Uhrzeigersinn um 180° gedreht und wieder abgelegt (Schritt S11). Im nächsten Schritt S12 wird der Greifer 5 mit dem Teigstrangende 61 um 90° im Uhrzeigersinn gedreht, und danach das Teigstrangende 61 in der Schlaufe 12 abgelegt (Schritt S13).

Danach werden die Greifer 4 und 5, der Haltesteg 29, die Haltezunge 51 und 52, der Drehantrieb sowie alle weiteren verwendeten Vorrichtungsteile wieder in ihre Ausgangsposition zurück bewegt, um den nächsten Teigstrang 1 zu verarbeiten (Schritt S14).

### Bezugszeichenliste

- 100: Teigverarbeitungssystem
- 1: Teigstrang
- 2: Verarbeitungskopf
- 3: Verarbeitungstisch
- 4, 5: Greifer
- 6: schmale Förderriemen
- 7, 8: breite Förderriemen
- 9: -
- 10: -
- 11: Strangbereich
- 12: Schlinge
- 13, 14: Kreuzungspunkte
- 15: Horizontalführung
- 16: Hubzylinder
- 17, 18: Führungselemente
- 19: Vertikalführung
- 20: Drehkopf
- 21, 22: Greiffinger
- 23: Schiebeelement
- 24, 25: Achsen
- 26: U-förmiges Positionierungsmittel (erstes Positionierungsmittel)
- 27: Haltezunge
- 28: Anhebemittel (zweites Positionierungsmittel)
- 29: Haltesteg
- 30: bogenförmige Kontur
- 32: Tischgreifer
- 33: Greifermittel oder Positionierungsmittel (drittes Mittel)
- 34, 35: Greiffinger
- 36: Auflageplatte
- 37: Bolzen
- 38: Positionierungsmittel (viertes Mittel)
- 39: Haltestift
- 39b: Positionierungsmittel (fünftes Mittel)
- 40: Positionierungsmittel (sechstes Mittel)
- 41, 42: Haltearme
- 44: Lagerung
- 45: Kippelement
- 46: Hubzylinder

- 50: Gabelzinken
- 51: Haltezunge
- 52: Haltezunge
- 53: Schenkel

- 61: Teigstrangende
- 62: Teigstrangende
- 63: Drehantrieb
- 64: Schlinge
- 65: Schlinge
- 66: Teigbereich
- 67: Teigbereich
- 68: Grundkörper

- 70: Kreuzungspunkt
- 71: Kreuzungspunkt
- 72: Teigstrangbereich

## Patentansprüche

1. Teigverarbeitungssystem (100) zum Verarbeiten eines U-förmigen Teigstrangs (1), mit einem Verarbeitungskopf (2), der zwei Greifermittel (4, 5) zum Schlingen des Teigstrangs (1) umfasst, sowie mit einem Formtisch (3), der mit Positionierungsmitteln zum Positionieren des Teigstrangs (1) versehen ist, wobei
der Formtisch als Verarbeitungstisch (3) ausgeführt ist, **dadurch gekennzeichnet, dass** verschiedene Positionierungsmittel (26, 28, 33, 39, 39b, 40) des Verarbeitungstisches (3) mehrere unterschiedliche Verarbeitungsfunktionen aufweisen, wobei
wenigstens ein Positionierungsmittel als Anhebemittel (28) zum Anheben eines Teigstrangbereichs in einer Anhebungsposition ausgeführt ist, so dass der Teigstrang (1) gegenüber dem Formtisch (3) bereichsweise angehoben ist, und/oder wenigstens ein Positionierungsmittel als Greifermittel (33) zum Ziehen eines Teigstrangendes (61) ausgeführt ist, so dass der Teigstrang (1) bereichsweise gedehnt und/oder gezogen wird,
und/oder wenigstens ein Positionierungsmittel als Schwenkmittel (40) zum Verschwenken einer durch die Greifermittel (4, 5) des Verarbeitungskopfes (2) geformten Teigstrangschlinge um eine parallel zur Ebene des Verarbeitungstisches (3) angeordneten Drehachse ausgeführt ist.

2. Teigverarbeitungssystem nach Anspruch 1, **dadurch gekennzeichnet, dass** am Verarbeitungstisch (3) wenigstens ein Anhebemittel (28), ein Greifermittel (33) und ein Schwenkmittel (40) zur Herstellung eines Einstrangzopfes angeordnet ist.

3. Teigverarbeitungssystem nach Anspruch 1 oder 2, **dadurch gekennzeichnet, dass** das Schwenkmittel (40) zwei voneinander beabstandete Haltearme (41, 42) aufweist, die quer zu einer Förderrichtung des Verarbeitungstisches (3) gerichtet sind und an einem ihrer Enden eine, insbesondere L-förmige, Haltezunge (51, 52) tragen, wobei beide Haltearme (41, 42) um eine zu den Haltearmen (41, 42) beabstandete, parallele Drehachse B drehbar sind, und wobei die Haltearme (41, 42) an den gegenüberliegenden Enden der Haltezungen (51, 52) an einer Lagerung (44) fixiert sind, die um eine in Förderrichtung des Verarbeitungstisches (3) gerichtete Achse (C) kippbar sind, so dass eine Auf- und Ab-Bewegung der Haltearme (41, 42) bzw. der Haltezungen (51, 52) entsteht.

4. Teigverarbeitungssystem nach einem der vorhergehenden Ansprüche, **dadurch gekennzeichnet, dass** am Verarbeitungstisch (3) ein, vorzugsweise U-förmiges, Positionierungsmittel (26) zum Fixieren eines Teigstrangendes (62) während der Teigverarbeitung vorhanden ist, wobei dieses Positionierungsmittel (26) in den Verarbeitungstisch (3) eintauchbar ausgeführt ist.

5. Teigverarbeitungssystem nach einem der vorhergehenden Ansprüche, **dadurch gekennzeichnet, dass** am Verarbeitungstisch (3) wenigstens ein Positionierungsmittel als ein Haltestift (39) ausgeführt ist, das in den Verarbeitungstisch (3) eintauchbar ist.

6. Teigverarbeitungssystem nach einem der vorhergehenden Ansprüche, **dadurch gekennzeichnet, dass** der Verarbeitungstisch (3) mit mehreren nebeneinanderliegenden Förderbändern (6, 7, 8) versehen ist, wobei zumindest ein Teil der Positionierungsmittel (26, 28, 33, 39, 39b) zwischen den Förderbändern (6, 7, 8) angeordnet sind.

7. Verfahren zum Verarbeiten eines Teigstranges aus einem U-förmig gebogenen Teigstrang (1), wobei
mittels eines zwei Greifermittel (4, 5) umfassenden Verarbeitungskopfes (2) der Teigstrang (1) geschlungen wird, und mittels eines verschiedene Verarbeitungsfunktionen aufweisenden Verarbeitungstisches (3) der Teigstrang (1) mittels Positionierungsmitteln positioniert und ein Einstrangzopf geformt wird, wobei durch wenigstens ein Positionierungsmittel als Anhebemittel (28) ein Teigstrangbereich in eine Anhebungsposition angehoben wird, so dass der Teigstrang (1) gegenüber dem Formtisch (3) bereichsweise angehoben ist,
und/oder durch wenigstens ein Positionierungsmittel als Greifermittel (33) ein Teigstrangende (61) gezogen wird, so dass der Teigstrang (1) bereichsweise gedehnt und/oder gezogen wird,
und/oder durch wenigstens ein Positionierungsmittel als Schwenkmittel (40) eine durch die Greifermittel (4, 5) des Verarbeitungskopfes (2) geformte Teigstrangschlinge um eine parallel zur Ebene des Verarbeitungstisches (3) angeordnete Drehachse verschwenkt wird.

8. Verfahren nach Anspruch 7 und zur Herstellung eines Einstrangzopfes mit wenigstens
- einem Teigstrang-Zuführungsschritt, bei dem der U-förmige Teigstrang dem Verarbeitungstisch (3) zugeführt wird,
- einem Verarbeitungsschritt, bei dem aus dem U-förmigen Teigstrang (1) aus einer sich überkreuzenden Teigbewegung eine etwa brezelartige Grundform mit einer ersten Schlinge (64) und einer zweiten Schlinge (65) geformt wird, wobei aber der Teigstrang im Kreuzungspunkt (70) nicht geschlungen bzw. nicht verknotet ist,
- einem ersten Fixierungsschritt, bei dem ein Ende (62) des Teigstranges (1) am Verarbeitungstisch (3) und/oder am Teigstrang (1) im Bereich der ersten Schlinge (64) fixiert wird,
- einem zweiten Fixierungsschritt, bei dem das zweite Ende (61) des Teigstrangs (1) im Bereich der dem Ende (62) gegenüberliegenden, zweiten Schlinge (65) am Verarbeitungstisch (3) fixiert wird,
- einem Anhebeschritt, bei dem der Teigstrang (1) im Bereich der zweiten Schlinge (65) angehoben wird,
- einem Greifschritt, bei dem das Teigende (61) von einem am Verarbeitungstisch (3) angeordneten Greifmittel (33) gegriffen wird und zwischen dem Verarbeitungstisch (3) und einem Teigstrangbereich (12) durchgezogen wird,
- einem weiteren Greifschritt, bei dem das andere Ende (61) von einem am Verarbeitungskopf (3) angeordneten Greifmittel (5) gegriffen wird,
- einem Schwenkschnitt, bei dem die zweite Schlinge (65) um etwa 180° um eine quer zur Förderrichtung des Verarbeitungstisches (3) angeordnete Achse B in der angehobenen Position geschwenkt wird, wobei der Teig nun sich anschließend an zwei Stellen (13, 14) überkreuzt,
- einem Teig-Bewegungsschritt, bei dem die zweite Schlinge (65) wieder auf den Verarbeitungstisch (3) gelegt wird,
- einem weiteren Teig-Bewegungsschritt, bei dem das andere Teigende (61) vom Greifer (5) in die zweite Schlinge (65) gelegt und/oder durch die Schlingenöffnung hindurch gedrückt wird.

9. Verfahren nach Anspruch 8 und mit einem System nach einem der Ansprüche 1 bis 6, **dadurch gekennzeichnet,**
- **dass** der Verarbeitungsschritt zur Schaffung der brezelartigen Grundform durch Greifermittel (4, 5) des Verarbeitungskopfes (3) erfolgt,
- **dass** der erste Fixierungsschritt mittels eines, vorzugsweise U-förmigen, Positionierungsmittel (26) erfolgt,
- **dass** der zweite Fixierungsschritt durch mindestens einen Haltestift (39, 39b) erfolgt,
- **dass** der Anhebeschritt durch mindestens ein Anhebemittel (28), vorzugsweise durch ein linear geführtes Anhebeelement und/oder durch Haltearme (41, 42) erfolgt,
- **dass** der Schwenkschritt durch zwei Haltearme (41, 42) erfolgt,
- **dass** der Teig-Bewegungsschritt durch Kippen der Haltearme (41, 42) in Richtung des Verarbeitungstisches (3) erfolgt,
- **dass** der weitere Teig-Bewegungsschritt durch ein am Verarbeitungskopf (3) angeordneten Greifermittel (5) erfolgt.

## Claims

1. Dough processing system (100) for processing a U-shaped strand of dough (1), comprising a processing head (2), which has two gripping means (4, 5) for looping the dough strand (1) and a shaping table (3), which is equipped with positioning means for positioning the dough strand (1), wherein the shaping table is embodied as a processing table (3), **characterized in that** various positioning means (26, 28, 33, 39, 39b, 40) of the processing table (3) having multiple different processing functions, wherein at least one positioning means is embodied as a lifting means (28) for raising a section of a strand of dough to a raised position, so that sections of the dough strand (1) are raised relative to the shaping table (3),
and/or at least one positioning means is embodied as a gripping means (33) for pulling on a dough strand end (61), so that sections of the dough strand (1) are stretched and/or pulled,
and/or at least one positioning means is embodied as pivoting means (40) for pivoting a dough strand loop, shaped by the gripping means (4, 5) of the processing head (2), around an axis of rotation that is arranged parallel to the plane of the processing table (3).

2. Dough processing system according to claim 1, **characterized in that** at least one lifting means (28), one gripping means (33) and one pivoting means (40) are arranged on the processing table (3) for producing a single-strand braid.

3. Dough processing system according to claim 1 or 2, **characterized in that** the pivoting means (40) has two retaining arms (41, 42) spaced from one another, which are aligned transversely to a direction of conveyance along the processing table (3), and which support at one of their ends a particularly L-shaped retaining tongue (51, 52), wherein the two retaining arms (41, 42) are capable of rotating around a parallel axis of rotation B, which is spaced from the retaining arms (41, 42), and wherein the retaining arms (41, 42) are secured at the ends opposite the retaining tongues (51, 52) to a mount (44), which are tiltable around an axis (C) aligned in the direction of conveyance along the processing table (3), resulting in an upward and downward movement of the retaining arms (41, 42) or the retaining tongues (51, 52).

4. Dough processing system according to any one of the preceding claims, **characterized in that** a preferably U-shaped positioning means (26) for securing a dough strand end (62) during dough processing is provided on the processing table (3), wherein said positioning means (26) is embodied as capable of retracting into the processing table (3).

5. Dough processing system according to any one of the preceding claims, **characterized in that** at least one positioning means on the processing table (3) is embodied as a holding pin (39), which is capable of retracting into the processing table (3).

6. Dough processing system according to any one of the preceding claims, **characterized in that** the processing table (3) is equipped with multiple conveyor belts (6, 7, 8) arranged side by side, wherein at least some of the positioning means (26, 28, 33, 39, 39b) are arranged between the conveyor belts (6, 7, 8).

7. Method for processing a strand of dough from a U-shaped, curved dough strand (1), wherein the strand of dough (1) is looped by means of a processing head (2) comprising two gripping means (4, 5) and by means of a processing table (3) having various processing functions the strand of dough (1) is positioned by means of positioning means and a single-strand braid is formed, wherein a section of the strand of dough is raised to a raised position by at least one positioning means, which is embodied as a lifting means (28), so that sections of the dough strand (1) are raised relative to the shaping table (3),
and/or a dough strand end (61) is pulled by means of at least one positioning means, which is embodied as a gripping means (33), so that sections of the dough strand (1) are stretched and/or pulled,
and/or a dough strand loop, which is shaped by the gripping means (4, 5) of the processing head (2), is pivoted around an axis of rotation that is arranged parallel to the plane of the processing table (3), by means of at least one positioning means, which is embodied as pivoting means (40).

8. Method according to claim 7 and for producing a single-strand braid, comprising at least
- a dough strand infeed step, in which the U-shaped strand of dough is fed to the processing table (3),
- a processing step in which an approximately pretzel-like basic form comprising a first loop (64) and a second loop (65) is formed from the U-shaped dough strand (1) through a crossover dough movement, wherein the dough strand is not looped or knotted at the intersection point (70),
- a first securing step, in which one end (62) of the dough strand (1) is secured on the processing table (3) and/or on the dough strand (1) in the area of the first loop (64),
- a second securing step, in which the second end (61) of the dough strand (1) is secured in the area of the second loop (65), opposite the end (62), on the processing table (3),
- a lifting step, in which the strand of dough (1) is raised in the area of the second loop (65),
- a gripping step, in which another end of the dough (61) is gripped by a gripping means (33) arranged on the processing table (3) and is pulled through between the processing table (3) and an area of the strand section (12),
- a further gripping step, in which the other end (61) is gripped by a gripping means (5) arranged on the processing head (3),
- a pivoting step, in which the second loop (65) is pivoted approximately 180° around an axis B arranged transversely to the direction of conveyance along the processing table (3) to the raised position, wherein the dough then intersects at two points (13, 14),
- a dough movement step, in which the second loop (65) is placed back on the processing table (3),
- a further dough movement step, in which the other dough end (61) is placed by the gripper (5) in the second loop (65) and/or is pushed through the loop opening.

9. Method according to claim 8 and using a system according to any one of claims 1 to 6, **characterized in that**
- the processing step for producing the pretzel-like basic form is implemented by means of gripping means (4, 5) of the processing head (3),
- the first securing step is implemented by means of a preferably U-shaped positioning means (26),
- the second securing step is implemented by means of at least one holding pin (39, 39b),
- the lifting step is implemented by means of at least one lifting means (28), preferably by a linearly guided lifting element and/or by retaining arms (41, 42),
- the pivoting step is implemented by means of two retaining arms (41, 42),
- the dough movement step is implemented by tilting the retaining arms (41, 42) in the direction of the processing table (3),
- the further dough movement step is implemented by means of a gripping means (5) arranged on the processing head (3).

## Revendications

1. Système de travail de pâte (100) utilisé pour travailler un boudin de pâte en U (1), comprenant une tête de travail (2) dotée de deux moyens de préhension (4, 5) pour former des boucles avec le boudin de pâte (1) ainsi qu'une table de formage (3), équipée de moyens de positionnement pour positionner le boudin de pâte (1), la table de formage étant conçue sous forme de table de travail (3),
**caractérisé en ce que** différents éléments de positionnement (26, 28, 33, 39, 39b, 40) de la table de travail (3) présentent plusieurs fonctions de travail différentes, au moins un moyen de positionnement étant conçu en tant que moyen de levage (28) pour soulever une région du boudin de pâte dans une position de relevage de façon que le boudin de pâte (1) soit relevé par endroits par rapport à la table de formage (3),
et/ou au moins un moyen de positionnement étant conçu en tant que moyen de préhension (33) pour étirer une extrémité du boudin de pâte (61) de façon que le boudin de pâte (1) soit allongé et/ou étiré par endroits,
et/ou au moins un moyen de positionnement étant conçu en tant que moyen de pivotement (40) pour faire pivoter une boucle de boudin de pâte, formée par les moyens de préhension (4, 5) de la tête de travail (2), autour d'un axe de rotation parallèle au plan de la table de travail (3).

2. Système de travail de pâte selon la revendication 1, **caractérisé en ce qu'**est disposé sur la table de travail (3) au moins un moyen de relevage (28), un moyen de préhension (33) et un moyen de pivotement (40) pour produire une tresse monobrin.

3. Système de travail de pâte selon la revendication 1 ou 2, **caractérisé en ce que** le moyen de pivotement (40) présente deux bras support (41, 42) espacés l'un de l'autre, qui sont orientés transversalement à une direction de transport de la table de travail (3) et portent à l'une de leurs extrémités une languette de retenue (51, 52), en particulier en forme de L, les deux bras support (41, 42) étant aptes à tourner autour d'un axe de rotation B parallèle aux bras support (41, 42) et situé à distance de ceux-ci, et les bras support (41, 42) étant fixés, aux extrémités opposées des languettes de retenue (51, 52), sur un logement (44) et pouvant basculer autour d'un axe (C) orienté dans la direction de transport de la table de travail (3) de façon à produire un mouvement de montée et descente des bras support (41, 42) ou des languettes de retenue (51, 52).

4. Système de travail de pâte selon l'une des revendications précédentes, **caractérisé en ce qu'**est prévu sur la table de travail (3) un moyen de positionnement (26), de préférence en U, pour fixer une extrémité de boudin de pâte (62) pendant le travail de la pâte, ce moyen de positionnement (26) étant conçu de manière à pouvoir être inséré dans la table de travail (3).

5. Système de travail de pâte selon l'une des revendications précédentes, **caractérisé en ce que**, sur la table de travail (3), au moins un moyen de positionnement est réalisé sous forme de goupille de retenue (39) pouvant être insérée dans la table de travail (3).

6. Système de travail de pâte selon l'une des revendications précédentes, **caractérisé en ce que** la table de travail (3) est pourvue de plusieurs bandes transporteuses (6, 7, 8) juxtaposées, au moins une partie des moyens de positionnement (26, 28, 33, 39, 39b) étant disposée entre les bandes transporteuses (6, 7, 8).

7. Procédé destiné à travailler une pâte à partir d'un boudin de pâte (1) recourbé en forme de U, dans lequel le boudin de pâte (1) est enroulé à l'aide d'une tête de travail (2) dotée de deux moyens de préhension (4, 5), et dans lequel, au moyen d'une table de travail (3) présentant différentes fonctions de travail, le boudin de pâte (1) est positionné à l'aide de moyens de positionnement et une tresse monobrin est formée, une région du boudin de pâte étant soulevée dans une position de relevage par au moins un moyen de positionnement sous forme de moyen de relevage (28) de façon à relever le boudin de pâte (1) par endroits par rapport à la table de formage (3),
et/ou une extrémité de boudin de pâte (61) étant étirée par au moins un moyen de positionnement sous forme de moyen de préhension (33) de façon à allonger et/ou étirer le boudin de pâte (1) par endroits,
et/ou une boucle de boudin de pâte formée par les moyens de préhension (4, 5) de la tête de travail (2) étant amenée à pivoter autour d'un axe de rotation parallèle au plan de la table de travail (3) par au moins un moyen de positionnement sous forme de moyen de pivotement (40).

8. Procédé selon la revendication 7 et destiné à produire une tresse monobrin, comprenant au moins :
- une étape d'acheminement d'un boudin de pâte, dans laquelle le boudin de pâte en forme de U est acheminé à la table de travail (3),
- une étape de travail dans laquelle, à partir du boudin de pâte (1) en U, une forme de base sensiblement de type bretzel présentant une première boucle (64) et une seconde boucle (65) est formée par un mouvement de pâte croisé, le boudin de pâte n'étant cependant pas enroulé ou noué au point de croisement (70),
- une première étape de fixation, dans laquelle une extrémité (62) du boudin de pâte (1) est fixée sur la table de travail (3) et/ou sur le boudin de pâte (1) dans la région de la première boucle (64),
- une seconde étape de fixation, dans laquelle la seconde extrémité (61) du boudin de pâte (1) est fixée sur la table de travail (3) dans la région de la seconde boucle (65) opposée à l'extrémité (62),
- une étape de relevage, dans laquelle le boudin de pâte (1) est relevé dans la région de la seconde boucle (65),
- une étape de préhension, dans laquelle l'extrémité (61) de la pâte est saisie par un moyen de préhension (33) disposé sur la table de travail (3) et tirée entre la table de travail (3) et une région (12) du boudin de pâte,
- une autre étape de préhension, dans laquelle l'autre extrémité (61) est saisie par un moyen de préhension (5) disposé sur la tête de travail (3),
- une étape de pivotement, dans laquelle la seconde boucle (65) est amenée à pivoter, dans la position relevée, de sensiblement 180° autour d'un axe B situé transversalement à la direction de transport de la table de travail (3), la pâte se croisant alors en deux points (13, 14),
- une étape de déplacement de la pâte, dans laquelle la seconde boucle (65) est reposée sur la table de travail (3),
- une autre étape de déplacement de la pâte, dans laquelle l'autre extrémité de pâte (61) est passée par le moyen de préhension (5) dans la seconde boucle (65) et/ou poussée à travers l'ouverture de la boucle.

9. Procédé selon la revendication 8 et comprenant un système selon l'une des revendications 1 à 6, **caractérisé en ce que**
- l'étape de travail destinée à créer la forme de base de type bretzel est réalisée par des moyens de préhension (4, 5) de la tête de travail (3),
- la première étape de fixation s'effectue à l'aide d'un moyen de positionnement (26), de préférence en forme de U,
- la seconde étape de fixation est réalisée par au moins une goupille de retenue (39, 39b),
- l'étape de relevage est réalisée par au moins un moyen de relevage (28), de préférence par un élément de relevage à guidage linéaire et/ou par des bras support (41, 42),
- l'étape de pivotement est réalisée par deux bras support (41, 42),
- l'étape de déplacement de la pâte s'effectue par basculement des bras support (41, 42) en direction de la table de travail (3),
- l'autre étape de déplacement de la pâte est réalisée par un moyen de préhension (5) disposé sur la tête de travail (3).
